(19) Europäisches Patentamt / European Patent Office / Office européen des brevets

(11) **EP 4 358 430 B1**

(12) **EUROPEAN PATENT SPECIFICATION**

(45) Date of publication and mention
of the grant of the patent:
**24.06.2026 Bulletin 2026/26**

(21) Application number: **22852075.5**

(22) Date of filing: **29.07.2022**

(51) International Patent Classification (IPC):
***H04L 69/323*** *(2022.01)*

(52) Cooperative Patent Classification (CPC):
**H04L 69/323**

(86) International application number:
**PCT/CN2022/109123**

(87) International publication number:
**WO 2023/011362 (09.02.2023 Gazette 2023/06)**

(54) **CONTROL METHOD IN SATELLITE COMMUNICATION SYSTEM, AND RELATED APPARATUS**

STEUERUNGSVERFAHREN IN EINEM SATELLITEN-KOMMUNIKATIONSSYSTEM UND ZUGEHÖRIGE VORRICHTUNG

PROCÉDÉ DE COMMANDE DANS UN SYSTÈME DE COMMUNICATION SATELLITE, ET APPAREIL ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.07.2021 CN 202110877279**

(43) Date of publication of application:
**24.04.2024 Bulletin 2024/17**

(73) Proprietor: **Huawei Technologies Co., Ltd.**
**Shenzhen, Guangdong 518129 (CN)**

(72) Inventors:
- **GAN, Wenyu**
  **Shenzhen, Guangdong 518129 (CN)**
- **QIAN, Feng**
  **Shenzhen, Guangdong 518129 (CN)**
- **ZHU, Xudong**
  **Shenzhen, Guangdong 518129 (CN)**
- **YAO, Zhendong**
  **Shenzhen, Guangdong 518129 (CN)**
- **LIN, Lixin**
  **Shenzhen, Guangdong 518129 (CN)**
- **XU, Haibo**
  **Shenzhen, Guangdong 518129 (CN)**

(74) Representative: **Körber, Martin Hans**
**Mitscherlich PartmbB**
**Karlstraße 7**
**80333 München (DE)**

(56) References cited:
| | |
|---|---|
| CN-A- 1 753 545 | CN-A- 104 506 267 |
| CN-A- 105 934 897 | CN-A- 110 784 255 |
| CN-A- 112 954 665 | CN-B- 111 903 237 |
| US-A- 5 905 443 | US-A- 6 157 621 |
| US-B1- 6 522 635 | |

## Description

### TECHNICAL FIELD

This application relates to the field of satellite communication technologies, and in particular, to a method in a BeiDou communication system, and a related apparatus.

### BACKGROUND

The BeiDou satellite navigation system is an important infrastructure that integrates positioning, timing and communication and that is independently developed by China. A BeiDou short packet communication service is one of features of the BeiDou satellite navigation system, which is different from that of other global navigation systems such as a GPS, a GLONASS, and Galileo. The BeiDou short packet communication service is especially applicable to areas that mobile communication does not cover or cannot cover, or in which communication systems are damaged, such as oceans, deserts, grasslands, and uninhabited areas. In a communication system of BeiDou-3 satellites, a short packet technology system is upgraded. Some necessary resources of a BeiDou communication system are opened for civil use. For civil services and device features, communication protocols need to be designed based on features of the BeiDou communication system.

Because the BeiDou communication system opens limited civil resources, and a current sending capability of a BeiDou device is also limited, an outbound data capacity in the BeiDou communication system is low. Therefore, how to implement reliable and effective transmission of an outbound service under a limitation of the low outbound data capacity is an urgent problem to be resolved.

US 6 522 635 B1 dislcoses a communication protocol, in particular a Standard-C communication protocol, for sending and receiving data messages ommunication system using a satellite.

### SUMMARY

This application provides a method in a BeiDou communication system, and a related apparatus. According to the method provided in embodiments of this application, reliable and effective transmission of an outbound service can be implemented under a limitation of a low outbound data capacity. The invention is defined in the appended claims. In the following, parts of the description and drawings referring to embodiments which are not covered by the claims are not embodiments of the invention, but are examples useful for understanding the invention.

According to a second aspect, an outbound transmission control method in a BeiDou communication system is provided. The method may include: A first terminal receives a first physical frame sent by a BeiDou network device, where the first physical frame includes a first user frame that is to be sent to the first terminal and a second user frame that is to be sent to a second terminal, frame header information of the first user frame includes a first user ID field and a first frame type field, the first user ID field indicates a terminal that receives the first user frame, and the first user ID field includes ID information of the first terminal; and the first terminal parses out the first user frame from the first physical frame, and discards the second user frame.

The first user frame includes a satellite link control protocol data unit SLC PDU, an acknowledgment character ACK frame, and an application layer receipt frame. The SLC PDU may be used to transmit data, and the acknowledgment character ACK frame may indicate whether the BeiDou network device successfully receives an SLC PDU of a terminal. The application layer receipt frame indicates whether the BeiDou network device successfully parses a received application layer packet.

In this disclosure, the BeiDou network device can simultaneously send user frames of a plurality of terminal users, to implement reliable and effective transmission of an outbound service under a limitation of a low outbound data capacity. In addition, the BeiDou network device may further send different types of user frames. In this way, requirements of different outbound services may not be met. The first terminal may also receive different types of user frames.

### BRIEF DESCRIPTION OF DRAWINGS

FIG. 1 is a schematic diagram of an architecture of a BeiDou communication system 10 according to an embodiment of this application;
FIG. 2 is a schematic diagram of an outbound transmission process of data in a BeiDou communication system according to an embodiment of this application;
FIG. 3A to FIG. 3C are a schematic diagram of a protocol encapsulation architecture of outbound data in a BeiDou communication system 10 according to an embodiment of this application;

FIG. 4A to FIG. 4C are a schematic diagram of a protocol parsing architecture of outbound data in a BeiDou communication system 10 according to an embodiment of this application;

FIG. 5 is a schematic diagram of a data format of outbound data according to an embodiment of this application;

FIG. 6 is a schematic diagram of another data format of outbound data according to an embodiment of this application;

FIG. 7A is a schematic diagram of a frame format of an SLC frame according to an embodiment of this application;

FIG. 7B is a schematic diagram of a frame format of another SLC frame according to an embodiment of this application;

FIG. 7C is a schematic diagram of a frame format of still another SLC frame according to an embodiment of this application;

FIG. 7D is a schematic diagram of a frame format of still another SLC frame according to an embodiment of this application;

FIG. 8A is a schematic diagram of a transmission success scenario in a transmission mechanism 1 of an SLC layer during a data outbound process according to an embodiment of this application;

FIG. 8B is a schematic diagram of a transmission failure scenario in a transmission mechanism 1 of an SLC layer during a data outbound process according to an embodiment of this application;

FIG. 9A is a schematic diagram of a transmission success scenario in a transmission mechanism 2 of an SLC layer during a data outbound process according to an embodiment of this application;

FIG. 9B is a schematic diagram of a transmission failure scenario in a transmission mechanism 2 of an SLC layer during a data outbound process according to an embodiment of this application;

FIG. 10A is a schematic diagram of a transmission success scenario in a transmission mechanism 3 of an SLC layer during a data outbound process according to an embodiment of this application;

FIG. 10B is a schematic diagram of another transmission success scenario in a transmission mechanism 3 of an SLC layer during a data outbound process according to an embodiment of this application;

FIG. 10C is a schematic diagram of a transmission failure scenario in a transmission mechanism 3 of an SLC layer during a data outbound process according to an embodiment of this application;

FIG. 11A is a schematic diagram of a transmission failure scenario in a transmission mechanism 4 of an SLC layer during a data outbound process according to an embodiment of this application;

FIG. 11B is a schematic flowchart of an outbound transmission control method in a BeiDou communication system according to an embodiment of this application;

FIG. 12 is a schematic diagram of a structure of a terminal 100 according to an embodiment of this application;

FIG. 13 is a schematic diagram of a structure of a communication apparatus according to an embodiment of this application;

FIG. 14 is a schematic diagram of a structure of another communication apparatus according to an embodiment of this application; and

FIG. 15 is a schematic diagram of a structure of another communication apparatus according to an embodiment of this application; and

FIG. 16 is a schematic diagram of a structure of another communication apparatus according to an embodiment of this application.

## DESCRIPTION OF EMBODIMENTS

Terms used in the following embodiments of this application are merely intended to describe specific embodiments, but are not intended to limit this application. Terms "one", "a", "the", "the foregoing", "this", and "the one" of singular forms used in this specification and the appended claims of this application are also intended to include plural forms, unless otherwise specified in the context clearly. It should also be understood that, the term "and/or" used in this application indicates and includes any or all possible combinations of one or more associated listed items.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two.

The following describes a BeiDou communication system 10 according to embodiments of this application.

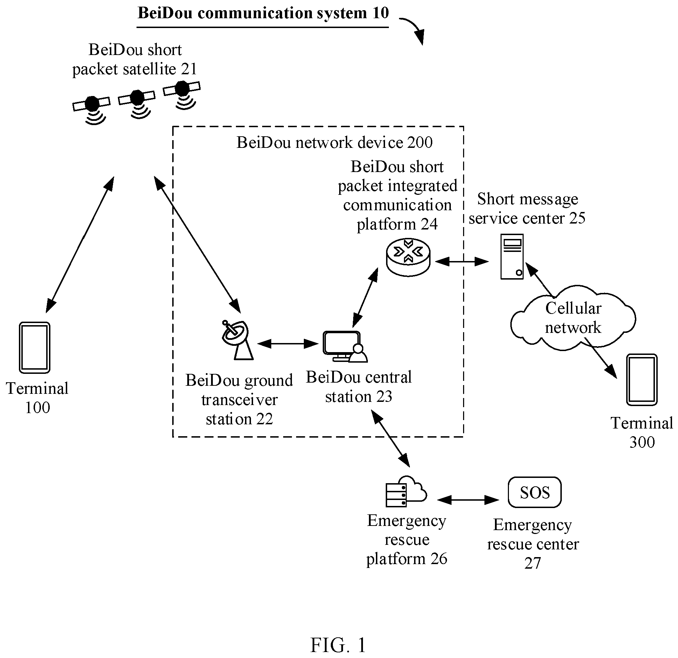

FIG. 1 is a schematic diagram of an architecture of the BeiDou communication system 10 according to an embodiment of this application.

As shown in FIG. 1, the BeiDou communication system 10 may include a terminal 100, a BeiDou short packet satellite 21, a BeiDou network device 200, a short message service center 25, and a terminal 300. Optionally, the BeiDou communication system 10 may further include an emergency rescue platform 26 and an emergency rescue center 27.

The terminal 100 may send short packet information to the BeiDou short packet satellite 21, and the BeiDou short packet satellite 21 performs only relay, and directly forwards the short packet information sent by the terminal 100 to the BeiDou network device 200 on the ground. The BeiDou network device 200 may parse, based on a BeiDou communication protocol, the short packet information forwarded by the satellite, and forward, to the short message service center (short message service center, SMSC) 25, packet content of a general packet type parsed out from the short packet information. The short message service center 25 may forward the packet content to the terminal 300 through a conventional cellular communication network. The BeiDou network device 200 may alternatively send, to the emergency rescue center 27 by using the emergency rescue platform 26, a packet of an emergency rescue type sent by the terminal 100.

The terminal 300 may alternatively send a short message to the short message service center 25 through a conventional cellular communication network. The short message service center 25 may forward the short message of the terminal 300 to the BeiDou network device 200. The BeiDou network device 200 may send the short message of the terminal 300 to the terminal 100 through relaying by the BeiDou short packet satellite 21.

The BeiDou network device 200 may include a BeiDou ground transceiver station 22, a BeiDou central station 23, and a BeiDou short packet integrated communication platform 24. The BeiDou ground transceiver station 22 may include one or more devices each having a sending function and one or more devices having a receiving function, or may include one or more devices having a sending function and a receiving function. This is not limited herein. The BeiDou ground transceiver station 22 may be used for a data processing function of the BeiDou network device 200 at a physical (physical layer protocol, PHY) layer. The BeiDou central station 23 may be used for a data processing function of the BeiDou network device 200 at a satellite link control (satellite link control protocol, SLC) layer and a message data convergence protocol (message data convergence protocol, MDCP) layer. The BeiDou short packet integrated communication platform 24 may be used for a data processing function at an application layer (application layer protocol, APP).

The BeiDou communication system 10 performs communication through a satellite link, and therefore is mainly characterized by a long delay (about 270 ms in one direction), and a large link loss. Currently, the BeiDou communication system 10 mainly supports a burst short message service, and does not support link status management, mobility management, broadcast control information, or the like.

An operating mode of the BeiDou network device 200 may be a duplex mode, and the BeiDou network device 200 may receive and send data at the same time.

The BeiDou network device 200 may send data to the terminal 100 by using the BeiDou short packet satellite 21. However, due to a current sending capability of the BeiDou network device 200, an outbound service packet of the BeiDou network device 200 needs to be segmented into a plurality of physical layer frames for transmission. In addition, a civil terminal (for example, the terminal 300 in FIG. 1) sends a plurality of types of services (for example, a short message, a large amount of text information, picture information, and a voice message) to the terminal 100 by using the BeiDou network device, and different service types have different requirements for a packet transmission mode at a bottom layer of the BeiDou network device.

Therefore, embodiments of this application provide an outbound transmission control method in the BeiDou communication system. The BeiDou network device 200 may segment an application layer packet into a plurality of protocol data units (protocol data units, PDUs) at an MDCP layer, which may be referred to as MDCP PDUs. The MDCP PDU may include a follow-up indicator field. The follow-up indicator field may indicate that the current MDCP PDU is a start MDCP PDU, an intermediate MDCP PDU, or a last MDCP PDU of a plurality of MDCP PDUs that are continuously sent, or is an MDCP PDU that is separately sent. The BeiDou network device 200 may sequentially deliver the MDCP PDUs to the SLC layer as service data units (service data units, SDUs) at the SLC layer, which may be referred to as SLC SDUs. The SLC SDU is segmented into N SLC PDUs at the SLC layer. SLC PDUs in a plurality of formats are provided to meet different service requirements. SLC PDUs of one or more users may be obtained at a PHY layer from the SLC layer. The SLC PDUs of the one or more users are spliced at the PHY layer to form outbound data of a physical slot with a fixed length. Finally, the BeiDou network device 200 may send the outbound data to one or more terminals.

In this way, the BeiDou network device 200 can implement multi-frame (one physical slot may include a plurality of user frames) transmission, and can meet requirements of outbound data of different service types. In addition, outbound resource configuration can be optimized, and outbound resource utilization can be improved.

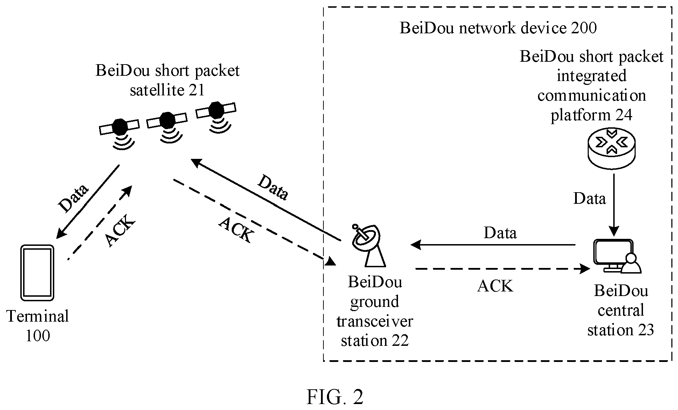

FIG. 2 shows an outbound transmission process of data in the BeiDou communication system according to an embodiment of this application.

As shown in FIG. 2, the data outbound process may mean that the BeiDou network device 200 sends data to the terminal 100. For example, the BeiDou short packet integrated communication platform 24 in the BeiDou network device 200 may send outbound data to the BeiDou central station 23. Then, the BeiDou central station 23 may send the outbound data to the BeiDou ground transceiver station 22, and the BeiDou short packet satellite 21 relays the outbound data and sends the outbound data to the terminal 100. After receiving the data, the terminal 100 may return an acknowledgment character (acknowledge character, ACK) at the SLC layer to the BeiDou central station 23. The ACK may be used to determine whether the terminal 100 successfully receives the outbound data sent by the BeiDou network device 200.

The following describes a protocol encapsulation architecture of outbound data in the BeiDou communication system 10 provided in embodiments of this application.

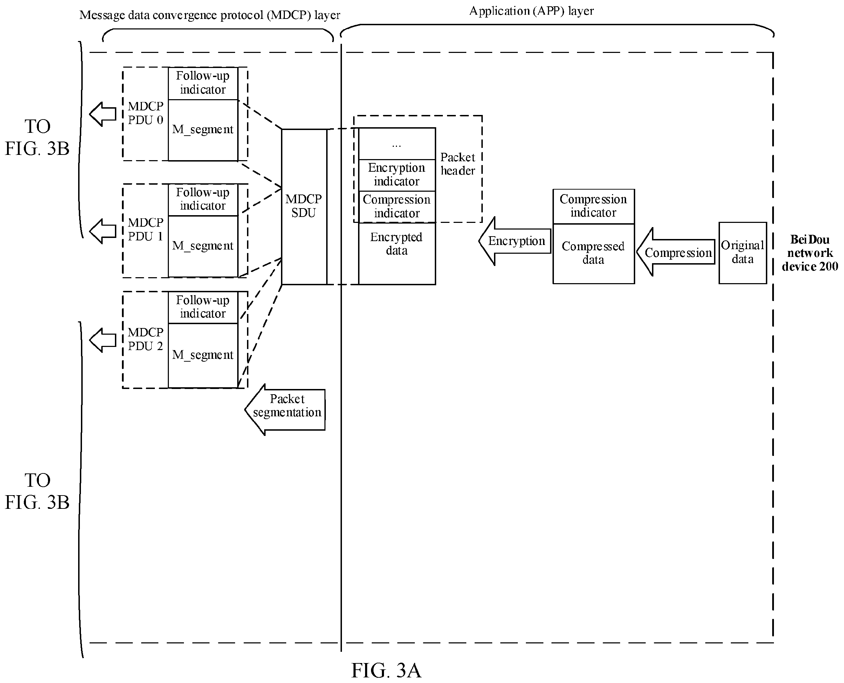

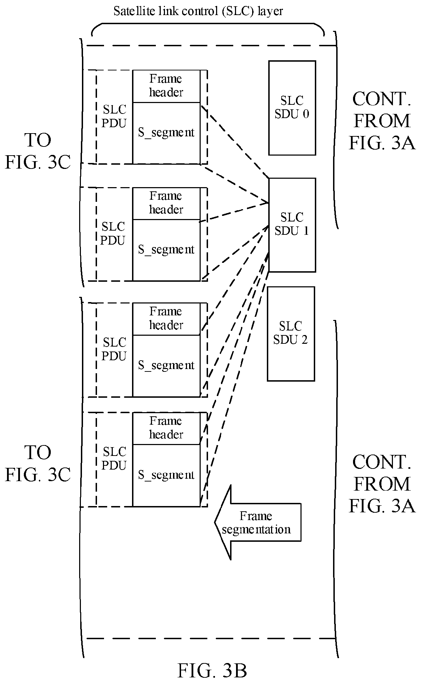

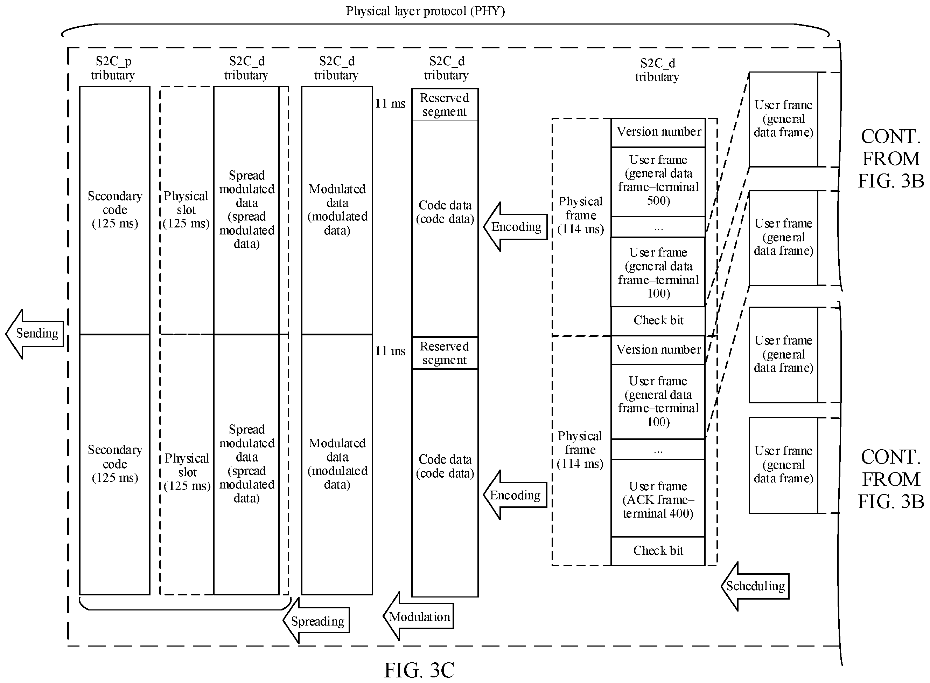

FIG. 3A to FIG. 3C are a schematic diagram of the protocol encapsulation architecture of the outbound data in the BeiDou communication system 10 according to an embodiment of this application.

As shown in FIG. 3A to FIG. 3C, a BeiDou short packet transmission protocol layer in the BeiDou network device 200 may be divided into an application layer (application layer protocol), a message data convergence protocol (message data convergence protocol, MDCP) layer, a satellite link control (satellite link control protocol, SLC) layer, and a physical layer (physical layer protocol, PHY). The BeiDou network device 200 may include the BeiDou ground transceiver station 22, the BeiDou central station 23, and the BeiDou short packet integrated communication platform 24. The BeiDou ground transceiver station 22 may be responsible for protocol processing at the PHY layer. The BeiDou central station 23 may be responsible for protocol processing at the SLC layer and the MDCP layer. The BeiDou short packet integrated communication platform 24 may be responsible for protocol processing at the APP layer.

When the BeiDou network device 200 sends data to the terminal 100, a working procedure of a BeiDou short packet transfer protocol in the BeiDou network device 200 may be as follows.

At the APP layer, the BeiDou network device 200 may compress original data into compressed data according to a compression algorithm, and add a compression indicator field before the compressed data. The compression indicator field may indicate a compression algorithm type of the compressed data. Then, the BeiDou network device 200 may encrypt the compressed data to obtain encrypted data, and add an encryption algorithm field to a header of the encrypted data. The encryption algorithm field indicates an encryption algorithm type of the encrypted data. The BeiDou network device 200 may encapsulate the encrypted data, the compression indicator field, and the encryption indicator field into an application layer packet and deliver the application layer packet to the MDCP layer. The application layer packet may include a packet header and packet data. The packet header may include the compression indicator field, the encryption indicator field, and the like. The packet data includes the foregoing encrypted data.

Optionally, the BeiDou network device 200 may alternatively encrypt the compression indicator field and the compressed data together, to obtain the encrypted data.

At the MDCP layer, the BeiDou network device 200 may obtain, through an inter-layer interface, the application layer packet delivered at the APP layer, and use the application layer packet as an MDCP SDU. At the MDCP layer, the BeiDou network device 200 may segment one MDCP SDU into one or more pieces of MDCP segment data (M_segment) with a fixed length, and add a follow-up indicator field to a header of each piece of MDCP segment data to obtain an MDCP PDU, that is, the MDCP PDU includes M_segment and the follow-up indicator field. The follow-up indicator field may indicate that the current MDCP PDU is a start MDCP PDU, an intermediate MDCP PDU, or a last MDCP PDU of a plurality of MDCP PDUs that are continuously sent, or is an MDCP PDU that is separately sent.

At the SLC layer, the BeiDou network device 200 may obtain, through an inter-layer interface, the MDCP PDU delivered at the MDCP layer, and use the MDCP PDU as an SLC SDU. At the SLC layer, the BeiDou network device 200 may segment the SLC SDU into one or more (a maximum of four) pieces of SLC segment data (S_segment) with a fixed length, and add frame header information to a header of each S_segment to obtain an SLC PDU.

Herein, it may be understood that, to adapt to a frame length at the physical layer, data needs to be segmented at the SLC layer. However, in a design at the SLC layer, one SLC SDU can be segmented into a maximum of four SLC PDUs. Therefore, data also needs to be segmented at the MDCP layer.

At the PHY layer, the BeiDou network device 200 may obtain, through an inter-layer interface, the SLC PDU delivered at the SLC layer. The BeiDou network device 200 may obtain SLC PDUs of one or more users from the SLC layer. The BeiDou network device 200 may splice SLC PDUs of a plurality of users, add a frame header (for example, a version number) of a physical frame to a spliced SLC PDU as a code block (code block) at the PHY layer, add a check bit (for example, a cyclic redundancy check (cyclic redundancy check, CRC) code) to a tail of the code block, and perform encoding (for example, polar encoding) on the code block and the CRC code. An encoded physical frame and a reserved segment may form code data of a data tributary (S2C_d tributary) of a physical slot with a fixed length. The BeiDou network device 200 may separately place a plurality of SLC PDUs of one user into different physical frames. Then, the BeiDou network device 200 forms pilot code data, namely, outbound data, by using the code data of the S2C_d tributary and pilot information of a pilot tributary (S2C_p tributary). The BeiDou network device 200 may send the outbound data to the BeiDou short packet satellite 21, and forward the outbound data to the terminal 100 through relaying by the BeiDou short packet satellite 21.

It may be understood that the pilot information of the S2C_p tributary is related to a satellite beam. When a satellite beam number is known, the pilot information of the S2C_p tributary is also known, and decoding does not need to be performed. The code data of the S2C_d tributary needs to be decoded.

The following describes a protocol parsing architecture of outbound data in the BeiDou communication system 10 provided in embodiments of this application.

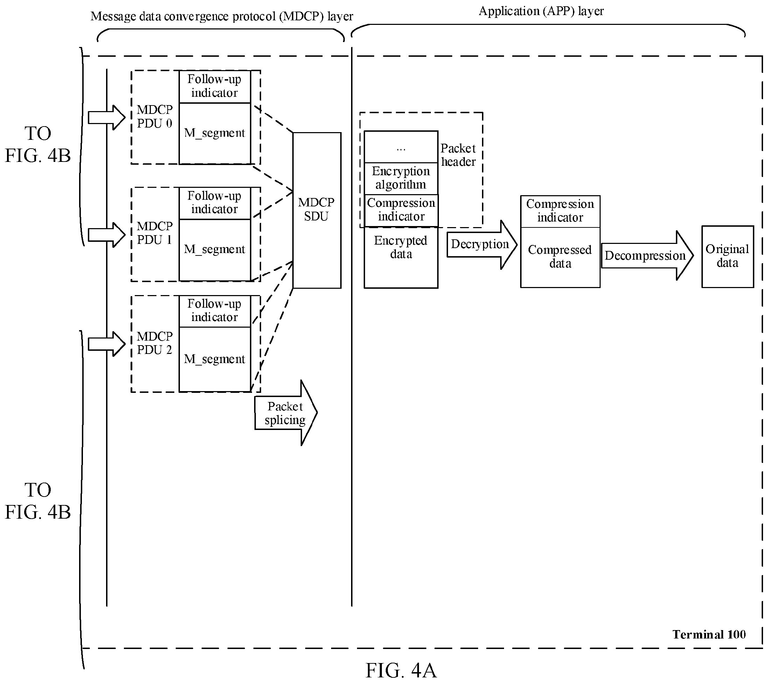

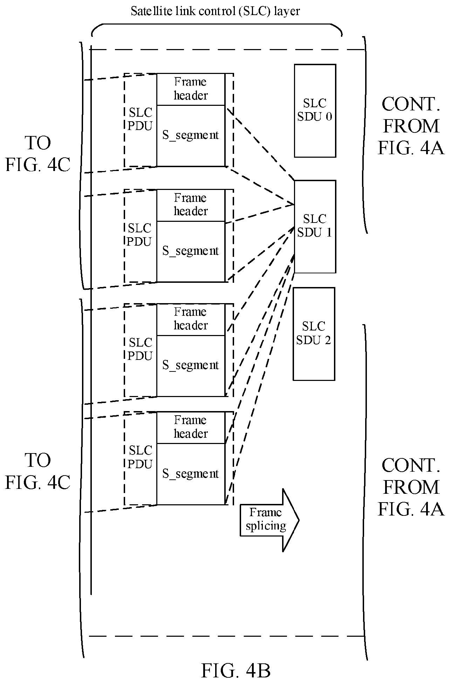

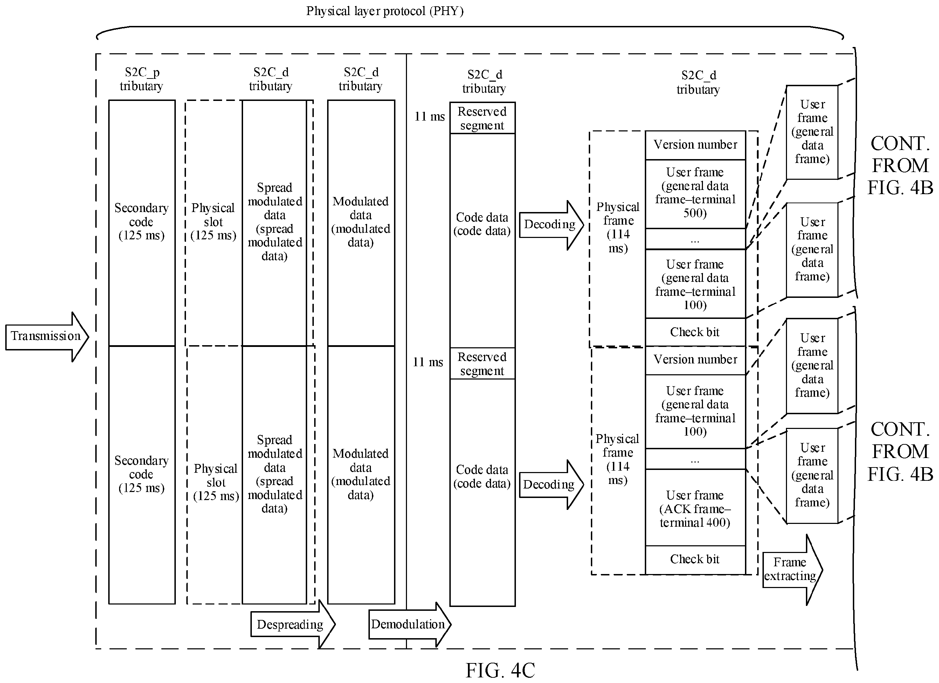

FIG. 4A to FIG. 4C are a schematic diagram of the protocol parsing architecture of the outbound data in the BeiDou communication system 10 according to an embodiment of this application.

As shown in FIG. 4A to FIG. 4C, a BeiDou short packet transmission protocol layer in the terminal 100 may be divided into an application layer (application layer protocol), a message data convergence protocol (message data convergence protocol, MDCP) layer, a satellite link control (satellite link control protocol, SLC) layer, and a physical layer (physical layer protocol, PHY).

When the terminal 100 receives data sent by the BeiDou network device, a working procedure of the BeiDou short packet transmission protocol layer of the terminal 100 may be as follows.

At the PHY layer, the terminal 100 may obtain modulated and spread pilot code data sent by the BeiDou network device 200. The terminal 100 may despread the received spread modulated data (spread+modulated data), to obtain modulated data (modulated data). Then, the terminal 100 may demodulate the modulated data to obtain the pilot code data (pilot+data). Subsequently, the terminal 100 may remove pilot information from the pilot code data to obtain code data (code data). Then, the terminal 100 may decode the code data, and verify integrity of a code block (code block) by using check data in a check bit field. If the code block is integral, the terminal 100 may extract the code block (code block), and deliver, through an inter-layer interface, the code block to the SLC layer as an SLC PDU at the SLC layer.

Herein, the pilot code data is the outbound data sent by the BeiDou network device 200, and the outbound data includes code data of an S2C_d tributary and pilot information of a pilot branch (S2C_p tributary).

At the SLC layer, the terminal 100 may splice SLC PDUs belonging to a same SLC SDU into one SLC SDU based on frame header information of the SLC PDUs. The terminal 100 may deliver, through an inter-layer interface, the SLC SDU to the MDCP layer as an MDCP PDU at the MDCP layer.

At the MDCP layer, the terminal 100 may splice all MDCP PDUs belonging to a same MDCP SDU into one MDCP SDU. The terminal 100 may deliver, through an inter-layer interface, the MDCP SDU to the APP layer as an application layer packet received at the APP layer.

At the APP layer, the terminal 100 may decrypt and decompress the application layer packet based on a packet header of the application layer packet, to obtain original data.

In embodiments of this application, the foregoing protocol processing process is merely an example for description, and a specific operation of protocol processing is not limited in this application.

The following describes in detail a data format of the outbound data in embodiments of this application.

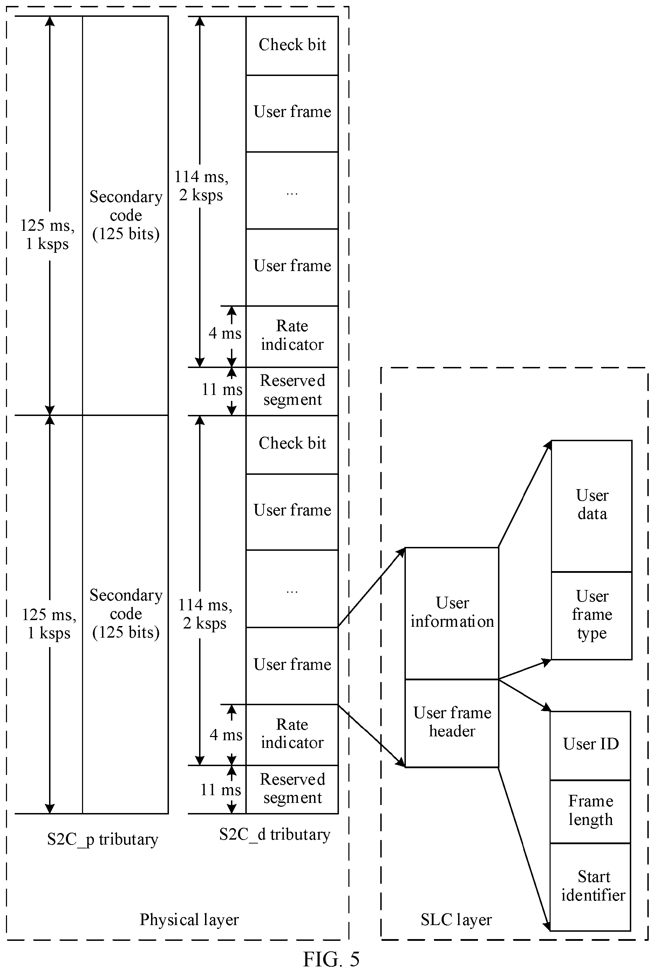

FIG. 5 shows a data format of outbound data according to an embodiment of this application.

As shown in FIG. 5, the outbound data is pilot code data at a physical layer. The pilot code data may include pilot data of an S2C_p tributary (pilot tributary) and data of an S2C_d tributary (data tributary). The pilot data of the S2C_p tributary is used to assist a terminal in parsing out a user frame in the data tributary. The S2C_d tributary may include data (a user frame) and a reserved field that are sent by a station side to a plurality of terminals, a rate indicator field, and a CRC check code field.

The terminal 100 may obtain, from the S2C_d tributary, the data sent by the station side to the terminal 100. Briefly, the terminal 100 may search for the S2C_p tributary, and then demodulate the S2C_d tributary by using the S2C_p tributary. After receiving the outbound data, the terminal 100 may parse user frame data in the S2C_d tributary into an SLC PDU (which may be referred to as an SLC frame or a user frame) at an SLC layer.

As shown in FIG. 5, the SLC PDU may include a user frame header field and a user information field. The user frame header field may include a start identifier field, a frame length field, and a user ID field. The user information field may include a user frame type field and a user data field.

The start identifier field identifies a start part of the user frame, and a length of the start identifier field may be 8 bits. The frame length field identifies a length of the user frame, and a length of the frame length field may be 8 bits or 9 bits. The user ID field indicates a terminal device that receives the user frame, and a length of the user ID field may be 44 bits. It may be understood that the lengths of the start identifier field, the frame length field, and the user ID field are not limited in embodiments of this application.

If the user ID field in the SLC PDU parsed out from the user frame data in the S2C_d tributary at the SLC layer of the terminal 100 is the same as a user ID of the terminal 100, the terminal 100 may combine one or more SLC PDUs into an SLC SDU packet at the SLC layer, and then send the SLC SDU packet to an MDCP layer for parsing. If the user ID field in the SLC PDU parsed out by the terminal 100 from the user frame data in the S2C_d tributary is different from a user ID of the terminal, the terminal 100 may discard the SLC PDU.

The user data field may include specific content sent by the station side to the terminal. The content may be a mailbox profile of the terminal, a letter message, an ACK frame, a NACK frame, or the like. This is not limited herein. The user frame type field may indicate a type of the user frame, and a length of the user frame type field may be 2 bits. It may be understood that the length of the user frame type field is not limited in embodiments of this application. A service type indicated by the user frame type field may be shown in Table 1 below.

**Table 1**

| User frame type field | Type | Description |
|---|---|---|
| 00 | General data frame | Packet information transmission (including the mailbox profile) |
| 01 | ACK frame | Acknowledgment frame for inbound data |

(continued)

| User frame type field | Type | Description |
|---|---|---|
| 10 | Receipt frame | Reliable receipt frame receiving |
| 11 | RSV | |

As shown in Table 1, when the user frame type field of the user frame is "00", it indicates that the user frame is a general data frame. When the user frame type field of the user frame is "01", it indicates that the user frame is an ACK frame. When the user frame type field of the user frame is "10", it indicates that the user frame is a receipt frame. The user frame type field being 11 is a reserved field.

Because the terminal 100 may perform blind decoding on a received physical frame, the rate indicator field may not need to be designed, and a bit of the field is saved. As outbound data protocols are evolving, a field is required to indicate different versions of protocols. Therefore, another data format of outbound data is provided.

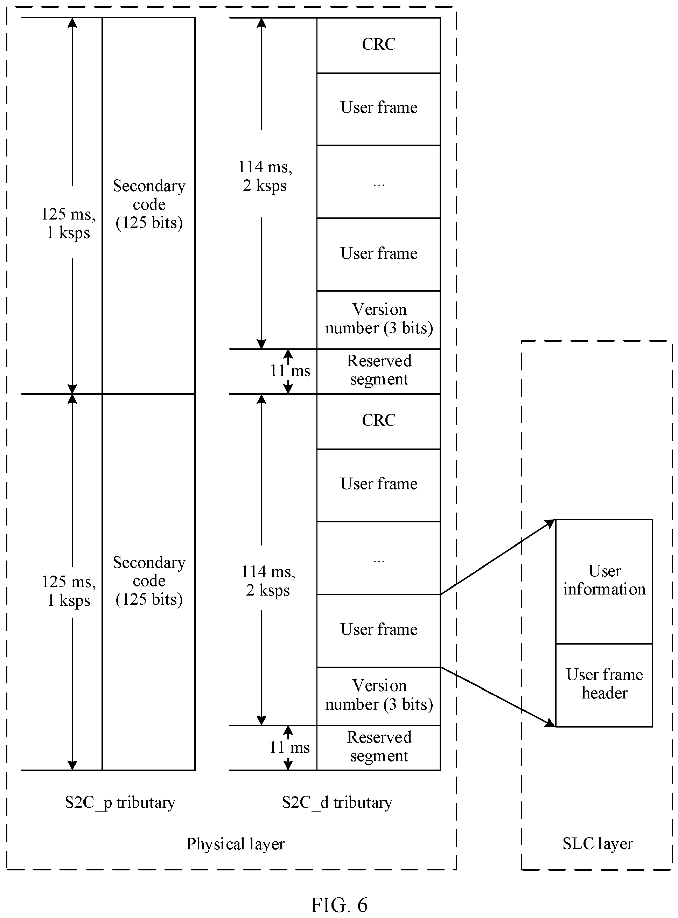

FIG. 6 shows another data format of outbound data according to an embodiment of this application.

As shown in FIG. 6, the outbound data is pilot code data at a physical layer. The pilot code data may include pilot data of an S2C_p tributary (pilot tributary) and data of an S2C_d tributary (data tributary). The pilot data of the S2C_p tributary is used to assist a terminal in parsing out a user frame in the data tributary. The S2C_d tributary may include data (a user frame) and a reserved field that are sent by a station side to a plurality of terminals, a version number field, and a CRC check code field. The version number field may be 3 bits, and a length of the version number field is not limited in embodiments of this application.

The terminal 100 may obtain, from the S2C_d tributary, the data sent by the station side to the terminal 100. Briefly, the terminal 100 may search for the S2C_p tributary, and then demodulate the S2C_d tributary by using the S2C_p tributary. After receiving the outbound data, the terminal 100 may parse user frame data in the S2C_d tributary into an SLC PDU (which may be referred to as an SLC frame or a user frame) at an SLC layer.

As shown in FIG. 6, the SLC PDU may include a user frame header field and a user information field. In embodiments of this application, frame formats of four types of SLC PDUs are provided. When types of SLC frames are different, frame formats of the SLC frames are also different. For details, refer to the following descriptions. Details are not described herein.

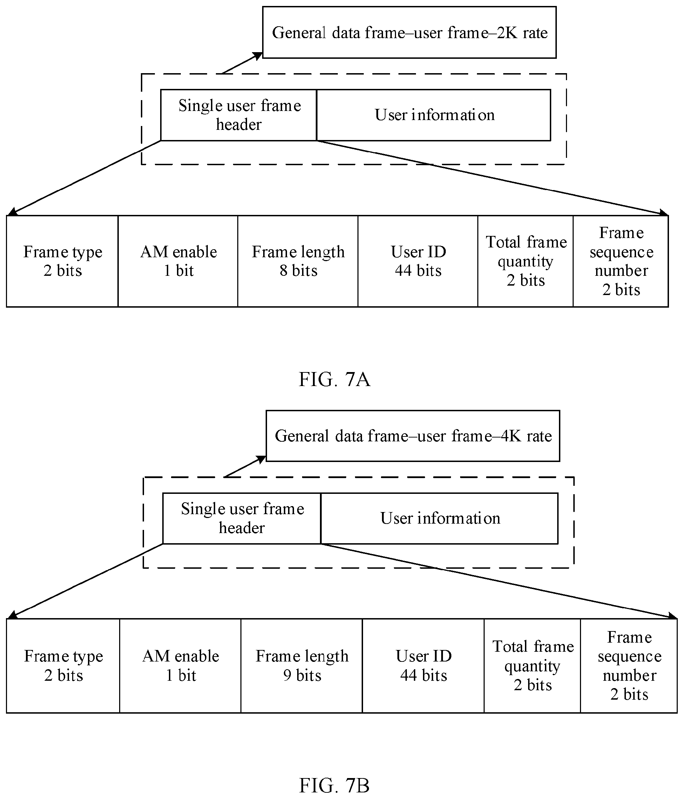

FIG. 7A shows a frame format of a type of SLC frame according to an embodiment of this application.

As shown in FIG. 7A, the SLC frame may be a general data frame at a 2K rate. The general data frame of the 2K rate may be used to query a mailbox profile and send a mail message. For example, when the terminal 100 sends a mailbox profile query request to the BeiDou network device 200, an SLC frame returned by the BeiDou network device 200 to the terminal 100 may be a general data frame at a 2K rate.

As shown in FIG. 7A, the general data frame of the 2K rate may include a single user frame header and user information. The single user frame header of the user frame may include a frame type field, an acknowledgement mode enable (acknowledge mode enable, AM enable) field, a frame length field, a user ID field, a total frame quantity field, and a frame sequence number field.

The frame type field may indicate a type of the SLC frame. A length of the frame type field may be 2 bits. The length of the frame type field is not limited in embodiments of this application.

The AM enable field indicates whether a terminal that receives the SLC frame needs to reply the BeiDou network device 200 with an ACK. A length of the AM enable field may be 1 bit. If a value in the AM enable field is a first value (for example, 1), it indicates that the terminal 100 needs to reply the BeiDou network device 200 with the ACK after receiving the user frame. If a value in the AM enable field is a second value (for example, 0), it indicates that the terminal 100 does not need to reply the BeiDou network device 200 with the ACK after receiving the SLC frame. The length of the AM enable field and a specific value of the AM enable field are not limited in embodiments of this application.

It may be understood that, in embodiments of this application, if the value in the AM enable field is the first value, a mode in which the terminal 100 needs to reply the BeiDou network device 200 with the ACK after receiving the user frame may be referred to as an acknowledgement mode (acknowledge mode, AM mode for short). If the value in the AM enable field is the second value, a mode in which the terminal does not need to reply the BeiDou network device 200 with the ACK after receiving the SLC frame may be referred to as an unacknowledgement mode (unacknowledge mode, UM mode for short).

The frame length field identifies a length of the SLC frame, and a length of the frame length field may be 8 bits. The length of the frame length field is not limited in embodiments of this application.

The user ID field may indicate that the SLC frame is sent by the BeiDou network device 200 to a first terminal, and an ID of the first terminal is the same as an ID shown in the user ID field. A length of the user ID field may be 44 bits. The length of the user ID field is not limited in embodiments of this application.

The total frame quantity field indicates a quantity of SLC frames sent by the BeiDou network device 200 to a terminal of a single user. A length of the total frame quantity field may be 2 bits. The length of the total frame quantity field is not limited in embodiments of this application.

The frame sequence number field indicates that the SLC frame is an $N^{th}$ frame in all the SLC frames sent by the BeiDou network device 200 to the terminal of the single user. A value of N is a value described in specific content in the frame sequence number field. A length of the frame sequence number field may be 2 bits. The length of the user ID field is not limited in embodiments of this application.

It may be understood that a format of the single user frame header in the SLC frame shown in FIG. 7A is merely an example. An arrangement sequence of fields in the single user frame header and a quantity of fields included in the single user frame header are not limited in embodiments of this application.

FIG. 7B shows a frame format of another type of SLC frame according to an embodiment of this application.

As shown in FIG. 7B, the SLC frame may be a general data frame of a 4K rate. The general data frame of the 4K rate may include a single user frame header and user information. The single user frame header of the user frame may include a frame type field, an AM enable (AM mode enable) field, a frame length field, a user ID field, a total frame quantity field, and a frame sequence number field.

The frame type field may indicate a type of the user frame. A length of the frame type field may be 2 bits.

The AM enable field indicates whether a terminal that receives the SLC frame needs to reply the BeiDou network device 200 with an ACK. A length of the AM enable field may be 1 bit. If a value in the AM enable field is D1 (for example, a binary value 1), it indicates that the terminal needs to reply the BeiDou network device 200 with the ACK after receiving the user frame. If a value in the AM enable field is D2 (for example, a binary value 0), it indicates that the terminal does not need to reply the BeiDou network device 200 with the ACK after receiving the SLC frame. The length of the AM enable field and a specific value of the AM enable field are not limited in embodiments of this application.

The frame length field identifies a length of the SLC frame, and a length of the frame length field is determined by a physical layer decoding parameter (namely, a decoding rate). For example, the length of the frame length field may be 9 bits. The length of the frame length field is not limited in embodiments of this application.

The user ID field may indicate that the SLC frame is sent by the BeiDou network device 200 to a first terminal, and an ID of the first terminal is the same as an ID shown in the user ID field. A length of the user ID field may be 44 bits. The length of the user ID field is not limited in embodiments of this application.

The total frame quantity field indicates a quantity of SLC frames sent by the BeiDou network device 200 to a terminal of a single user. A length of the total frame quantity field may be 2 bits. The length of the total frame quantity field is not limited in embodiments of this application.

The frame sequence number field indicates that the SLC frame is an $N^{th}$ frame in all user frames sent by the BeiDou network device 200 to the terminal 100. A value of N is a value described in specific content in the frame sequence number field. A length of the frame sequence number field may be 2 bits. The length of the user ID field is not limited in embodiments of this application.

It may be understood that a format of the single user frame header in the SLC frame shown in FIG. 7B is merely an example. An arrangement sequence of fields in the single user frame header and a quantity of fields included in the single user frame header are not limited in embodiments of this application. For example, the first field in the single user frame header may be any one of the frame type field, the AM enable (AM mode enable) field, the frame length field, the user ID field, the total frame quantity field, and the frame sequence number field.

Herein, in a possible implementation, the terminal may perform blind decoding on the received SLC frame, that is, the terminal may parse the SLC frame by using each rate that can be parsed by the terminal. If the terminal can parse out the SLC frame by using a first rate, a rate of the SLC frame is the first rate. Then, the terminal may determine a length of frame header information in the SLC frame based on the rate.

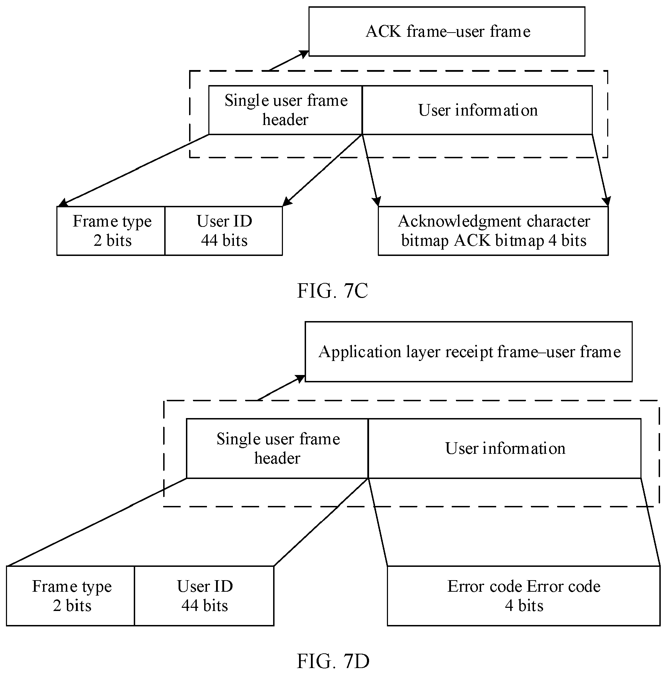

FIG. 7C shows a frame format of still another type of SLC frame according to an embodiment of this application.

As shown in FIG. 7C, the SLC frame is an ACK frame, and the ACK frame is used only at an SLC layer. The ACK frame may include a single user frame header and user information. A length of the single user frame header may be 36 bits, and a length of the user information may be 4 bits. The length of the single user frame and the length of the user information are not limited in embodiments of this application.

The single user frame header may include a frame type field and a user ID field. The frame type field may indicate a type of the SLC frame. A length of the frame type field may be 2 bits. The length of the frame type field is not limited in embodiments of this application.

The user ID field may indicate that the SLC frame is sent by the BeiDou network device 200 to a first terminal, and an ID of the first terminal is the same as an ID shown in the user ID field. A length of the user ID field may be 44 bits. The length of the user ID field is not limited in embodiments of this application.

The user information may include an acknowledgment character bitmap ACK bitmap. The ACK bitmap indicates whether the BeiDou network device 200 successfully receives the SLC frame sent by the terminal 100 to the BeiDou network device 200.

Further, in a possible implementation, a length of the ACK bitmap in the ACK frame sent by the BeiDou network device 200 to the terminal 100 may be determined based on a maximum quantity of SLC PDUs into which an SLC SDU sent by the terminal 100 to the BeiDou network device 200 can be segmented. Because a maximum quantity of SLC PDUs into which one SLC SDU can be segmented is fixed, the length of the ACK bitmap is also fixed. For example, if the SLC SDU sent by the terminal 100 to the BeiDou network device 200 may be segmented into a maximum of four SLC PDUs, the length of the ACK bitmap may be 4 bits.

Further, in a possible implementation, if the $N^{th}$ bit in the ACK bitmap is a value D3 (for example, a binary value 1), it indicates that the BeiDou network device 200 successfully receives an $N^{th}$ frame sent by the terminal 100 to the BeiDou network device 100.

For example, if the BeiDou network device 200 successfully receives four SLC frames sent by the terminal 100, user information of the SLC frames with which the BeiDou network device 200 replies to the terminal 100 may be an ACK bitmap "1111". If the terminal 100 sends four SLC frames to the BeiDou network device 200, the BeiDou network device 200 successfully receives only the 1st SLC frame of the current SLC SDU of the user, and none of the following three inbound SLC frames is successfully received, user information of the SLC frames with which the BeiDou network device 200 replies to the terminal 100 may be an ACK bitmap "1000".

It may be understood that the user information in the ACK frame may be designed as an ACK bitmap with a fixed length and very short content. Therefore, rates do not need to be distinguished for the ACK.

FIG. 7D shows a frame format of still another type of SLC frame according to an embodiment of this application.

As shown in FIG. 7D, the SLC frame may be an application layer receipt frame, and the application layer receipt frame is translated into information 1 (for example, an all-ones indication) at an SLC layer, and continues to be parsed at an application layer. The application layer receipt frame may include a single user frame header and user information. After the terminal 100 receives the application layer receipt frame sent by the BeiDou network device 200, the terminal 100 may parse the single user frame header of the application layer receipt frame at the SLC layer. The user information in the application layer receipt frame may be parsed at the application layer. A length of the single user frame header may be 36 bits, and a length of the user information may be 4 bits. The length of the single user frame and the length of the user information are not limited in embodiments of this application.

The single user frame header may include a frame type field and a user ID field. The frame type field may indicate a type of the user frame. A length of the frame type field may be 2 bits. The length of the frame type field is not limited in embodiments of this application.

The user ID field may indicate that the SLC frame is sent by the BeiDou network device 200 to a first terminal, and an ID of the first terminal is the same as an ID shown in the user ID field. A length of the user ID field may be 44 bits. The length of the user ID field is not limited in embodiments of this application.

The user information may be an error code (Error code) field, and the error code field may be parsed at the application layer. A length of the error code field may be 4 bits. The length of the error code field is not limited in embodiments of this application.

The following describes a transmission mechanism of an SLC layer during a data outbound process in the BeiDou communication system 10 provided in embodiments of this application.

1. Transmission mechanism 1

The BeiDou network device 200 has no functions of reclaiming an outbound resource and re-allocating the outbound resource. To be specific, a resource allocated by the BeiDou network device 200 to each SLC PDU in an SLC SDU is reclaimed, and is reallocated, for use, to an SLC SDU sent by the BeiDou network device 200 to another user.

The BeiDou network device 200 sends an SLC PDU in an SLC SDU to the terminal 100. When receiving the 1st SLC PDU, the terminal 100 starts to calculate maximum waiting duration for the terminal 100 to receive the SLC PDU in the SLC SDU, namely, a length of a time window for the terminal 100 to receive the SLC PDU. When the BeiDou network device 200 completes sending the last frame of SLC PDU in an SLC SDU, the BeiDou network device 200 may calculate maximum waiting duration for the BeiDou network device 200 to receive an ACK with which the terminal replies, namely, a length of a duration window for the BeiDou network device 200 to receive the ACK. When successfully receiving the SLC SDU sent by the BeiDou network device 200, the terminal 100 may send the ACK to the BeiDou network device 200. When failing to receive the SLC SDU sent by the BeiDou network device 200, the terminal 100 does not reply to the BeiDou network device 200 with a NACK.

In an embodiment of this application, that the terminal 100 successfully receives the SLC SDU sent by the BeiDou network device 200 may mean that the terminal 100 receives all SLC PDUs in the SLC SDU sent by the BeiDou network device 200, and may correctly parse out all the SLC PDUs in the SLC SDU.

In an embodiment of this application, that the terminal 100 fails to receive the SLC SDU sent by the BeiDou network device 200 may mean that the terminal 100 does not receive all SLC PDUs in the SLC SDU sent by the BeiDou network device 200, or fails to correctly parse out all SLC PDUs in the SLC SDU.

It may be understood that, when the terminal 100 successfully receives the SLC SDU sent by the BeiDou network device 200, a character with which the terminal 100 replies may be referred to as an ACK for short. When the terminal 100 fails to receive the SLC SDU sent by the BeiDou network device 200, that is, when the receiving fails, a character with which the terminal replies may be referred to as a NACK for short.

It may be understood that, if a UM mode is indicated in the SLC PDU of the SLC SDU sent by the BeiDou network device 200 to the terminal 100, after receiving the SLC SDU of the BeiDou network device 200, the terminal 100 does not need to reply to the BeiDou network device 200 with the ACK or the NACK regardless of whether receiving succeeds or fails.

1.1. Transmission success

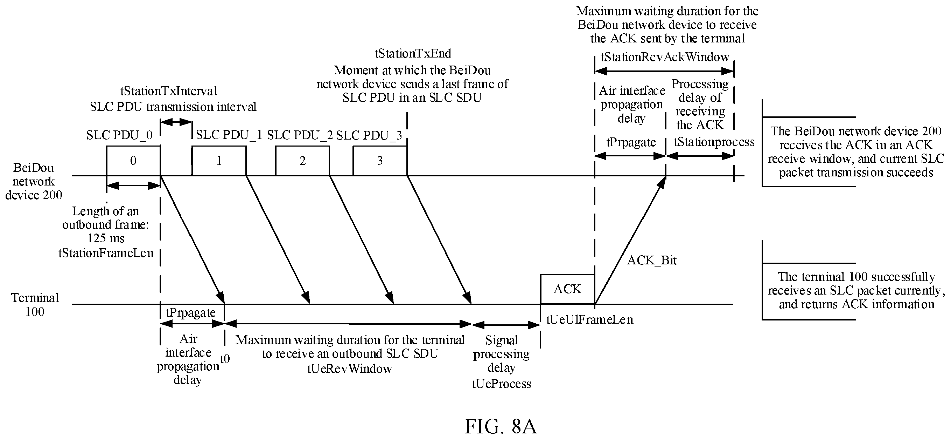

FIG. 8A is a schematic diagram of a transmission success scenario in the transmission mechanism 1 at the SLC layer during a data outbound process according to an embodiment of this application.

As shown in FIG. 8A, a communication interaction process of the BeiDou communication system 10 at the SLC layer may be as follows.

(1) The BeiDou network device 200 may send N SLC PDUs in the SLC SDU at an equal interval in ascending order of frame sequence numbers. Herein, $N \leq M$, and M is a maximum quantity of segments of the SLC SDU. In an embodiment of this application, an example in which M is equal to 4 is used for description.

(2) After receiving the 1st SLC PDU sent by the BeiDou network device 200, the terminal 100 starts an SLC layer receive session (session) at a moment t0, calculates maximum waiting duration of a receive window (tUeRevWindow) for the terminal 100 to receive the outbound SLC SDU, and feeds back an ACK to the BeiDou network device 200 after the SLC SDU receive window ends.

Optionally, a data part of the ACK may occupy 1 bit. Because the BeiDou network device 200 does not have a retransmission function, the terminal 100 does not need to notify the BeiDou network device 200 of an SLC PDU that is not received, and the terminal 100 only needs to notify the BeiDou network 200 that receiving succeeds or fails.

Optionally, a data part of the ACK may be a character C1 or a character C2. The character C1 may indicate that the terminal 100 successfully receives an SLC SDU sent by the BeiDou network device 200. The character C2 may indicate that the terminal 100 fails to receive an SLC SDU sent by the BeiDou network device 200. For example, the character C1 may be a character 1, and the character C2 may be a character 0.

(3) After completing sending the Nth SLC PDU, the BeiDou network device 200 receives, in an ACK receiving window, the ACK fed back by the terminal 100.

The following describes parameters shown in FIG. 8A and meanings thereof.

(1) tUeProcess: tUeProcess is a processing delay from completing receiving an SLC PDU sent by the BeiDou network device 200 to sending an ACK by the terminal 100. It is detected, based on experimental data, that a typical value of tUeProcess may be 60 ms.

(2) tPropagate: tPropagate is an air interface propagation delay between the terminal 100 and the BeiDou network device 200. It is detected, based on experimental data, that a typical value of tPropagate may be 270 ms.

(3) tStationStartRcvAck: tStationStartRcvAck is a start moment at which the BeiDou network device 200 receives an ACK.

(4) tStationEndRcvAck: tStationEndRcvAck is an end moment at which the BeiDou network device 200 receives an ACK.

(5) tStationRevAckWindow: tStationRevAckWindow is a length of a duration window for the BeiDou network device 200 to receive an ACK.

(6) tUeRevWindow: tUeRevWindow is a length of a time window for the terminal 100 to receive an SLC PDU, which is referred to as an SLC PDU receive window for short.

(7) nUeRevFrameSN: nUeRevFrameSN is a frame sequence number of an SLC PDU currently received by the terminal 100. In an embodiment of this application, the SLC SDU may include a maximum of four frames of SLC PDUs. Therefore, $0 \leq nStationRevFrameSN \leq 3$, and nStationRevFrameSN is an integer.

(8) tStationFrameLen: tStationFrameLen is a length of an SLC PDU sent by the BeiDou network device 200. In an embodiment of this application, a value of tStationFrameLen may be 125 ms.

(9) nStationTotalFrameNum: nStationTotalFrameNum is a total quantity of frames into which the BeiDou network device 200 segments an SLC SDU, namely, a total quantity of frames of SLC PDUs included in one SLC SDU.

(10) tStationTxInterval: tStationTxInterval is a time interval at which the BeiDou network device 200 sends SLC PDUs. The SLC PDU transmission interval (tStationTxInterval) may refer to an interval between transmission start moments of two adjacent SLC PDUs. Herein, tStationTxInterval is a preset value. For example, a typical value of tStationTxInterval may be 2s.

(11) tUeSendAck: tUeSendAck is a time point at which the terminal 100 sends an ACK to the BeiDou network device 200.

(12) tStationTxEnd: tStationTxEnd is a moment at which the BeiDou network device 200 sends the last SLC PDU.

(13) tUeUlFrameLen: tUeUlFrameLen is a time length of an ACK sent by the terminal 100. Herein, 128 ms≤tUeUl-FrameLen≤512 ms.

(14) $\delta$: $\delta$ is a sending time alignment deviation of an outbound physical frame on the BeiDou network device 200. The BeiDou network device 200 may not be necessarily at a sending moment of the outbound physical frame when completing signal processing and scheduling, and needs to wait for a sending moment of a next outbound physical frame before sending the physical frame. Herein, 0<$\delta$≤125 ms.

The following specifically describes how the terminal 100 determines a length of the SLC PDU receive window, and how the BeiDou network device 200 determines a start moment and an end moment of the ACK receive window in embodiments of this application.

(1) The terminal 100 receives the 1st frame of the SLC SDU and starts to start a session. The terminal 100 may determine the time length of the SLC PDU receive window on the terminal 100 based on a frame sequence number of the currently received SLC PDU, a time length in which the BeiDou network device 200 sends the SLC PDU, a total quantity of frames of the SLC PDU in the current SLC SDU session, and the SLC PDU transmission interval.

The terminal 100 may determine the time length of the SLC PDU receive window according to the following Formula (1):

$$tUeRevWindow =$$
$$\left(nStationTotalFrameNum - nStationRevFrameSN - 1\right)\ \text{Formula (1)}$$
$$*\left(tStationTxInterval + tStationFrameLen\right) + \ \delta$$

In the foregoing Formula (1), tUeRevWindow is the length of the time window for the terminal 100 to receive the SLC PDU, nStationTotalFrameNum is the total quantity of SLC PDU frames in the current SLC SDU session, nStation-RevFrameSN is the frame sequence number of the SLC PDU currently received by the terminal 100, tStationTxInterval is the SLC PDU transmission interval on the BeiDou network device 200, and nRevFrameSN={0, 1, ..., nStationTotalFrameNum-1}. Generally, nStationTotalFrameNum may be 4. In this case, nRevFrameSN={0, 1, 2, 3}. Herein, tStation-FrameLen is the length of the SLC PDU sent by the BeiDou network device 200. A length of tStationFrameLen is variable. In an embodiment of this application, the value of tStationFrameLen may be 125 ms. Herein, $\delta$ is the sending time alignment deviation of the outbound physical frame on the BeiDou network device 200, and a value of $\delta$ may be 125 ms.

(2) After the receive window for the terminal 100 to receive the SLC PDU ends, the terminal 100 performs information processing and Ack_Bit information construction. Finally, the terminal 100 carries Ack_Bit information by using an ACK frame and sends the ACK frame to the BeiDou network device 200. The terminal 100 may determine, based on the length of the SLC PDU receive window and a processing delay from completing receiving the SLC PDU sent by the BeiDou network device 200 to sending the ACK by the terminal 100, the time point at which the ACK is sent.

The terminal 100 may determine, according to the following Formula (2), the time point at which the ACK is returned:

$$tUeSendAck = tUeRevWindow + tUeProcess \quad \text{Formula (2)}$$

In the foregoing Formula (2), tUeSendAck is the time point at which the terminal 100 sends the ACK to the BeiDou network device 200, tUeRevWindow is the length of the time window for the terminal 100 to receive the SLC PDU, and tUeProcess indicates the processing delay from completing receiving the SLC PDU sent by the BeiDou network device 200 to sending the ACK by the terminal 100.

(3) The BeiDou network device 200 may determine, based on a moment at which the BeiDou network device 200 completes sending the last SLC PDU in the SLC SDU, the processing delay from completing receiving the SLC PDU sent by the BeiDou network device 200 to sending the ACK by the terminal 100, and the air interface propagation delay between the terminal 100 and the BeiDou network device 200, the start moment at which the BeiDou network device 200 receives the ACK.

The BeiDou network device 200 may determine, according to the following Formula (3), the start moment at which the ACK is received:

$$tStationTxEnd < tStationStartRcvAck < tStationTxEnd + 2 * tPropagate + tUeProcess \qquad \text{Formula}$$

(3)

In the foregoing Formula (3), tStationStartRcvAck is the start moment at which the BeiDou network device 200 receives the ACK, tStationTxEnd is the moment at which the BeiDou network device 200 sends the last SLC PDU, tUeProcess is the processing delay from completing receiving the SLC PDU sent by the BeiDou network device 200 to sending the ACK by the terminal 100, and tPropagate is the air interface propagation delay between the terminal 100 and the BeiDou network device 200.

In the foregoing Formula (3), tUeProcess is a minimum value of the processing delay from completing receiving the SLC PDU sent by the BeiDou network device 200 to sending the ACK by the terminal 100.

The BeiDou network device 200 may determine, based on the total quantity of frames into which the BeiDou network device 200 segments the SLC SDU and the time interval at which the BeiDou network device 200 sends the SLC PDU, the moment at which the BeiDou network device 200 sends the last SLC PDU.

The BeiDou network device may determine, according to the following Formula (4), the moment at which the BeiDou network device 200 sends the last SLC PDU:

$$tStationTxEnd = (nStationTotalFrameNum - 1) * (tStationTxInterval + tStationFrameLen) + \delta$$

Formula (4)

In the foregoing Formula (4), tStationTxEnd is the moment at which the BeiDou network device 200 sends the last SLC PDU, nStationTotalFrameNum is the total quantity of frames into which the BeiDou network device 200 segments the SLC SDU, tStationTxInterval is the time interval at which the BeiDou network device 200 sends the SLC PDU, and tStationFrameLen is the length of the SLC PDU sent by the BeiDou network device 200. A length of tStationFrameLen is variable. In an embodiment of this application, the value of tStationFrameLen may be 125 ms. Herein, $\delta$ is the sending time alignment deviation of the outbound physical frame on the BeiDou network device 200, and a value of $\delta$ may be 125 ms.

(4) The BeiDou network device 200 may determine, based on the moment at which the BeiDou network device 200 sends the last SLC PDU, the air interface propagation delay between the terminal 100 and the BeiDou network device 200, the processing delay from completing receiving the SLC PDU sent by the BeiDou network device 200 to sending the ACK by the terminal 100, and the time length of the ACK sent by the terminal 100, the end moment at which the BeiDou network device 200 receives the ACK.

The BeiDou network device 200 may determine, according to the following Formula (5), the end moment at which the BeiDou network device 200 receives the ACK:

$$tStationEndRcvAck = tStationTxEnd + 2 * tPropagate + tUeProcess + tUeUlFrameLen$$

Formula (5)

In the foregoing Formula (5), tStationEndRcvAck is the end moment at which the BeiDou network device 200 receives the ACK, tStationTxEnd is the moment at which the BeiDou network device 200 sends the last SLC PDU, tUeProcess is the processing delay from completing receiving the SLC PDU sent by the BeiDou network device 200 to sending the ACK by the terminal 100, tPropagate is the air interface propagation delay between the terminal 100 and the BeiDou network device 200, and tUeUlFrameLen is the time length of the ACK sent by the terminal 100.

In the foregoing Formula (5), tUeProcess is a maximum value of the processing delay from completing receiving the SLC PDU sent by the BeiDou network device 200 to sending the ACK by the terminal 100.

1.2. Transmission failure

In a possible implementation, the terminal 100 does not receive all SLC PDUs in an SLC SDU sent by the BeiDou network device 200. The terminal 100 does not feed back ACK information to the BeiDou network device 200. After an ACK receive window expires, if the BeiDou network device 200 does not receive the ACK fed back by the terminal 100 (the BeiDou network device 200 does not receive the ACK information after a moment tStationEndRcvAck arrives), the BeiDou network device 200 ends current SLC SDU transmission.

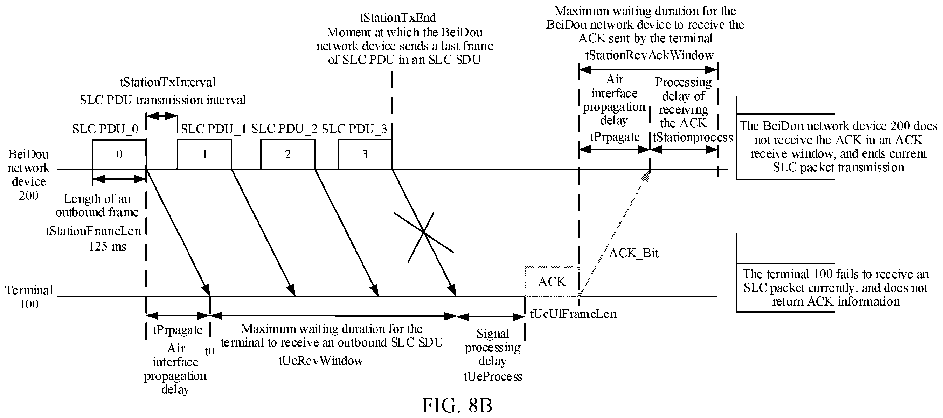

FIG. 8B is a schematic diagram of a transmission failure scenario in the transmission mechanism 1 of the SLC layer during a data outbound process according to an embodiment of this application.

As shown in FIG. 8B, the terminal 100 does not receive the last frame of SLC PDU in the SLC SDU sent by the BeiDou network device 200. The terminal 100 does not reply to the BeiDou network device 200 with an ACK. If the BeiDou network device 200 does not receive, in the ACK receive window, the ACK fed back by the terminal 100, the BeiDou network device 200 ends the current SLC SDU transmission.

2. Transmission mechanism 2

The BeiDou network device has no functions of reclaiming an outbound resource and re-allocating the outbound resource. When the BeiDou network device 200 sends an SLC SDU to the terminal 100, the terminal 100 calculates, based on a maximum transmission time interval, a receive window for the terminal to receive the SLC SDU. When successfully receiving the SLC SDU in the receive window, the terminal 100 may not reply to the BeiDou network device 200 with an ACK. When the terminal 100 fails to receive the SLC SDU in the receive window, the terminal 100 may not reply to the BeiDou network device 200 with a NACK.

2.1. Transmission success

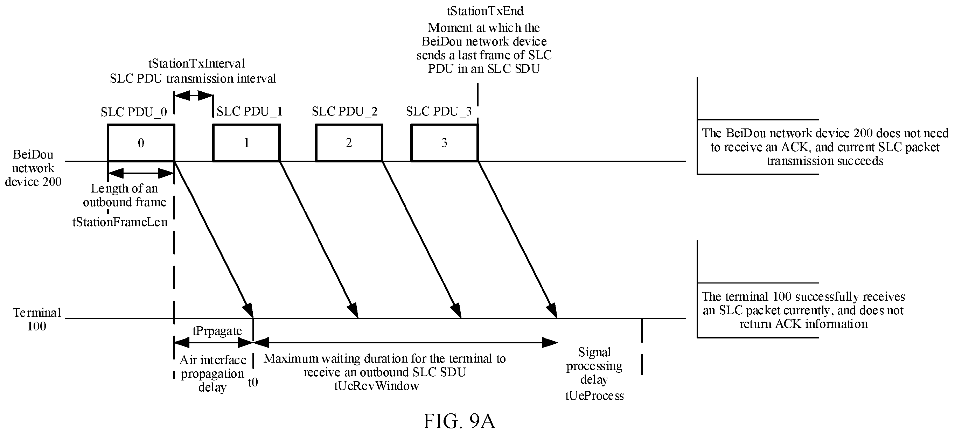

FIG. 9A is a schematic diagram of a transmission success scenario in the transmission mechanism 2 at the SLC layer during a data outbound process according to an embodiment of this application.

As shown in FIG. 9A, the BeiDou network device 200 may send four SLC PDUs in the SLC SDU at an equal interval in ascending order of frame sequence numbers. After receiving the 1st SLC PDU sent by the BeiDou network device 200, the terminal 100 starts an SLC layer receive session (session) at a moment t0, and calculates maximum waiting duration of a receive window (tUeRevWindow) for the terminal 100 to receive the outbound SLC SDU. After successfully receiving all the SLC PDUs in the SLC SDU in the time window tUeRevWindow, the terminal 100 does not reply to the BeiDou network device 200 with the ACK.

2.2. Transmission failure

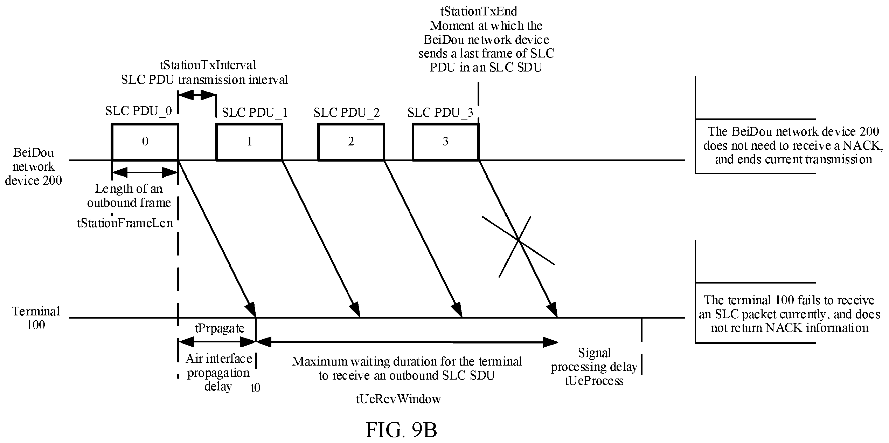

FIG. 9B is a schematic diagram of a transmission failure scenario in the transmission mechanism 2 at the SLC layer during a data outbound process according to an embodiment of this application.

As shown in FIG. 9B, the BeiDou network device 200 sends four SLC PDUs in the SLC SDU at an equal interval in ascending order of frame sequence numbers. After receiving the 1st SLC PDU sent by the BeiDou network device 200, the terminal 100 starts an SLC layer receive session (session) at a moment t0, and calculates maximum waiting duration of a receive window (tUeRevWindow) for the terminal 100 to receive the outbound SLC SDU. The terminal 100 does not receive the last frame of SLC PDU in the SLC SDU sent by the BeiDou network device 200. The terminal 100 may not reply to the BeiDou network device 200 with the NACK.

3. Transmission mechanism 3

The BeiDou network device has functions of reclaiming an outbound resource and re-allocating the outbound resource. When the BeiDou network device 200 sends an SLC SDU to the terminal 100, the terminal 100 calculates, based on a maximum transmission time interval, a receive window for the terminal to receive the SLC SDU. When successfully receiving the SLC SDU in the receive window, the terminal 100 may reply to the BeiDou network device 200 with an ACK. When the 1st frame received by the terminal 100 is not the 1st SLC PDU in the SLC SDU sent by the BeiDou network device 200, the terminal 100 immediately replies the BeiDou network device 200 with a NACK, and ends current receiving.

3.1. Transmission success

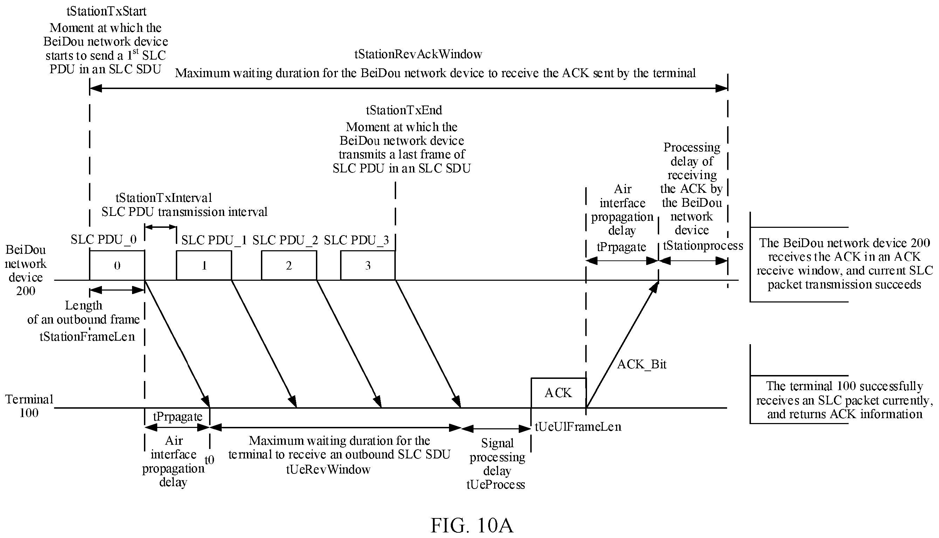

FIG. 10A is a schematic diagram of a transmission success scenario in the transmission mechanism 3 at the SLC layer during a data outbound process according to an embodiment of this application.

As shown in FIG. 10A, when starting to send the 1st SLC PDU in the SLC SDU, the BeiDou network device 100 starts to calculate a receive window for receiving the ACK fed back by the terminal 100. The BeiDou network device 200 may send four SLC PDUs in the SLC SDU at an equal interval in ascending order of frame sequence numbers. After receiving the 1st SLC PDU sent by the BeiDou network device 200, the terminal 100 starts an SLC layer receive session (session) at a moment t0, and calculates maximum waiting duration of a receive window (tUeRevWindow) for the terminal 100 to receive the outbound SLC SDU. After successfully receiving all the SLC PDUs in the SLC SDU in the time window tUeRevWindow, the terminal 100 replies to the BeiDou network device 200 with the ACK.

As shown in FIG. 10A, optionally, in a possible implementation, the BeiDou network device 200 may determine, based on a moment at which the BeiDou network device 200 starts to send the 1st SLC PDU in the SLC SDU, a moment at which the BeiDou network device 200 completes sending the last SLC PDU in the SLC SDU, a processing delay from completing receiving the SLC PDU sent by the BeiDou network device 200 to sending the ACK by the terminal 100, and an air interface propagation delay between the terminal 100 and the BeiDou network device 200, a start moment at which the BeiDou network device 200 receives the ACK.

The BeiDou network device 200 may determine, according to the following Formula (6), the start moment at which the ACK is received:

$$tStationTxStart < tStationStartRcvAck < tStationTxEnd + 2 * tPropagate + tUeProcess$$

Formula (6)

In the foregoing formula (6), tStationStartRcvAck is the start moment at which the BeiDou network device 200 receives the ACK, tStationTxStart is the moment at which the BeiDou network device 200 starts to send the 1st SLC PDU in the SLC SDU, tStationTxEnd is the moment at which the BeiDou network device 200 sends the last SLC PDU, tUeProcess is the processing delay from completing receiving the SLC PDU sent by the BeiDou network device 200 to sending the ACK by the terminal 100, and tPropagate is the air interface propagation delay between the terminal 100 and the BeiDou network device 200.

It may be understood that, when the terminal 100 successfully receives the last SLC PDU in the SLC SDU sent by the BeiDou network device 200, the ACK with which the terminal 100 replies to the BeiDou network device 200 may be a first character, for example, a character "1".

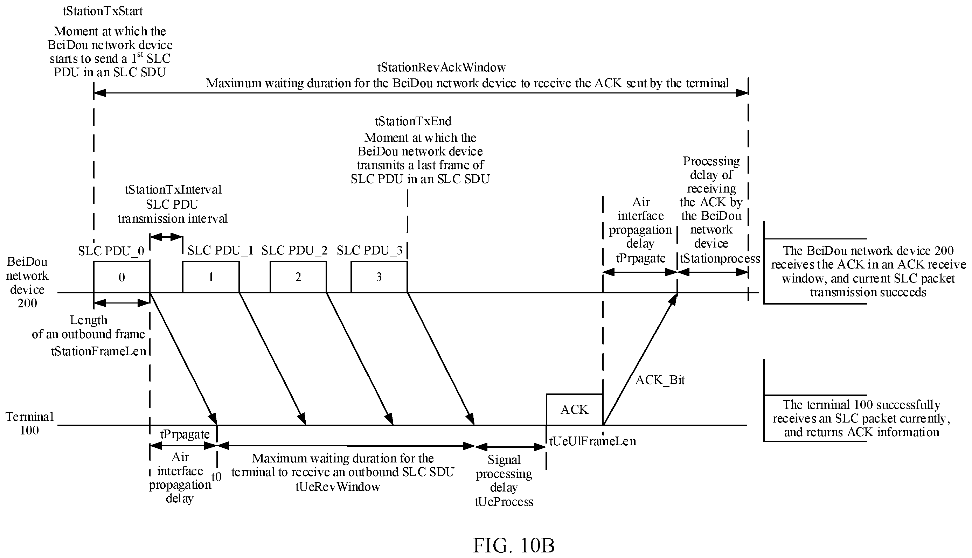

FIG. 10B is a schematic diagram of another transmission success scenario in the transmission mechanism 3 at the SLC layer during a data outbound process according to an embodiment of this application.

As shown in FIG. 10B, after completing sending the 1st SLC PDU in the SLC SDU, the BeiDou network device 100 starts to calculate a receive window for receiving the ACK fed back by the terminal 100. The BeiDou network device 200 may send four SLC PDUs in the SLC SDU at an equal interval in ascending order of frame sequence numbers. After receiving the 1st SLC PDU sent by the BeiDou network device 200, the terminal 100 starts an SLC layer receive session (session) at a moment t0, and calculates maximum waiting duration of a receive window (tUeRevWindow) for the terminal 100 to receive the outbound SLC SDU. After successfully receiving all the SLC PDUs in the SLC SDU in the time window tUeRevWindow, the terminal 100 replies to the BeiDou network device 200 with the ACK.

As shown in FIG. 10B, optionally, in a possible implementation, the BeiDou network device 200 may determine, based on a moment at which the BeiDou network device 200 starts to send the 1st SLC PDU in the SLC SDU, a length of an outbound frame sent by the BeiDou network device 200, a moment at which the BeiDou network device 200 completes sending the last SLC PDU in the SLC SDU, a processing delay from completing receiving the SLC PDU sent by the BeiDou network device 200 to sending the ACK by the terminal 100, and an air interface propagation delay between the terminal 100 and the BeiDou network device 200, a start moment at which the BeiDou network device 200 receives the ACK.

The BeiDou network device 200 may determine, according to the following Formula (6), the start moment at which the ACK is received:

$$tStationTxStart+tStationFrameLen < tStationStartRcvAck < tStationTxEnd + 2 * tPropagate + tUeProcess$$

Formula (7)

In the foregoing formula (7), tStationStartRcvAck is the start moment at which the BeiDou network device 200 receives the ACK, tStationTxStart is the moment at which the BeiDou network device 200 starts to send the 1st SLC PDU in the SLC SDU, tStationTxEnd is the moment at which the BeiDou network device 200 sends the last SLC PDU, tUeProcess is the processing delay from completing receiving the SLC PDU sent by the BeiDou network device 200 to sending the ACK by the terminal 100, tPropagate is the air interface propagation delay between the terminal 100 and the BeiDou network device 200, and tStationFrameLen is the length of the SLC PDU sent by the BeiDou network device 200. Generally, tStationFrameLen is 125 ms.

3.2. Transmission failure

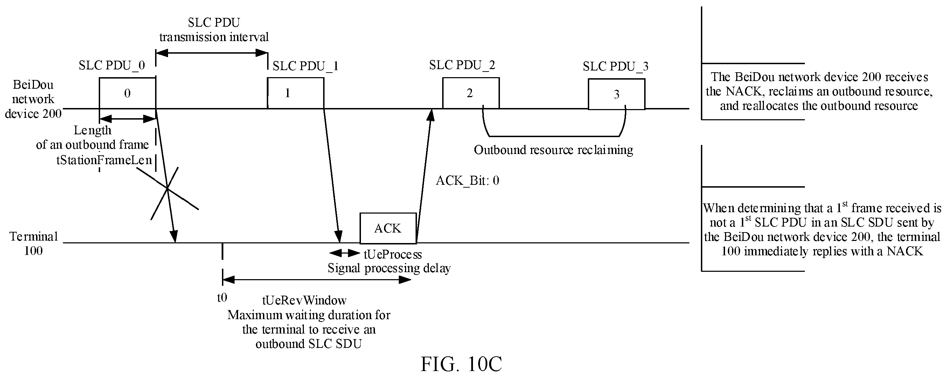

FIG. 10C is a schematic diagram of a transmission failure scenario in the transmission mechanism 3 at the SLC layer during a data outbound process according to an embodiment of this application.

As shown in FIG. 10C, after completing sending the 1st SLC PDU in the SLC SDU, the BeiDou network device 100 starts to calculate a receive window for receiving the ACK fed back by the terminal 100. The BeiDou network device 200 may send four SLC PDUs in the SLC SDU at an equal interval in ascending order of frame sequence numbers. The BeiDou network device 200 has sent the 1st SLC PDU (namely, an SLC PDU whose sequence number is 0 in FIG. 10C) and the 2nd

SLC PDU (namely, an SLC PDU whose sequence number is 1 in FIG. 10C). After receiving the 1st SLC PDU sent by the BeiDou network device 200, the terminal 100 starts an SLC layer receive session (session) at a moment t0, and calculates maximum waiting duration of a receive window (tUeRevWindow) for the terminal 100 to receive the outbound SLC SDU. The terminal 100 has received the 1st SLC PDU that has been sent by the BeiDou network device 200. However, the 1st frame parsed out by the terminal 100 is not the 1st SLC PDU in the SLC SDU sent by the BeiDou network device 200. The terminal 100 directly replies to the BeiDou network device with the NACK. The NACK may indicate that the 1st frame parsed out by the terminal 100 is not the 1st SLC PDU in the SLC SDU sent by the BeiDou network device 200.

After receiving the NACK, the BeiDou network device 200 may no longer send an SLC PDU that is in the SLC SDU and that is not sent. The BeiDou network device 200 may disable the ACK receive time window of the SLC SDU. The BeiDou network device 200 does not send the 3rd SLC PDU (namely, an SLC PDU whose sequence number is 2 in FIG. 10C) and the 4th SLC PDU (namely, an SLC PDU whose sequence number is 3 in FIG. 10C). The BeiDou network device 200 may allocate, to an SLC SDU that the BeiDou network device 200 needs to send to another user for use, the SLC PDU that is in the SLC SDU and that is not sent. To be specific, the BeiDou network device 200 may allocate resources of the 3rd SLC PDU (namely, the SLC PDU whose sequence number is 2 in FIG. 10C) and the 4th SLC PDU (namely, the SLC PDU whose sequence number is 3 in FIG. 10C) to the SLC SDU that the BeiDou network device 200 needs to send to another user for use. In this way, utilization of the outbound resource of the BeiDou network device 200 can be improved. Alternatively, the terminal 100 may enter a low power consumption procedure as soon as possible without waiting for another SLC PDU in the SLC SDU.

4. Transmission mechanism 4

The BeiDou network device has functions of reclaiming an outbound resource and re-allocating the outbound resource. When the BeiDou network device 200 sends an SLC SDU to the terminal 100, the terminal 100 calculates, based on a maximum transmission time interval, a receive window for the terminal to receive the SLC SDU. When successfully receiving the SLC SDU in the receive window, the terminal 100 may reply to the BeiDou network device 200 with an ACK.

The terminal 100 does not receive the last frame of SLC PDU in the SLC SDU sent by the BeiDou network device 200. In addition, the 1st SLC PDU that is received and that is parsed out by the terminal 100 is not the 1st SLC PDU in the SLC SDU sent by the BeiDou network device 200. If the terminal 100 estimates, based on a quantity of received SLC PDUs, that a possibility of reclaiming a resource by the BeiDou network device 200 is low, the terminal 100 does not reply with a NACK. After an ACK receive window expires, if the BeiDou network device 200 does not receive the NACK fed back by the terminal 100 (the BeiDou network device 200 does not receive NACK information after a moment tStationEndRcvAck arrives), the BeiDou network device 200 determines that SLC SDU transmission fails, and ends current SLC SDU transmission.

4.1. Transmission success

A transmission success scenario in the transmission mechanism 4 may be the same as the transmission success scenario in the transmission mechanism 3. For the transmission success scenario in the transmission mechanism 4, refer to the foregoing descriptions in FIG. 10A and FIG. 10B. Details are not described herein again.

4.2. Transmission failure

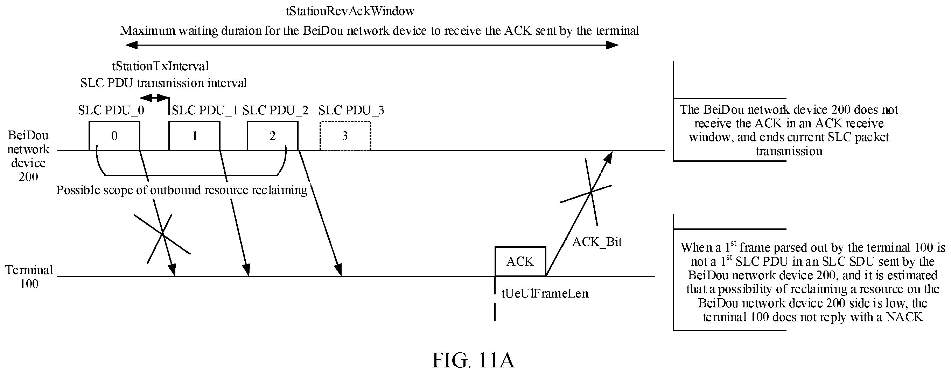

FIG. 11A is a schematic diagram of a transmission failure scenario in the transmission mechanism 4 at the SLC layer during a data outbound process according to an embodiment of this application.

As shown in FIG. 11A, after completing sending the 1st SLC PDU in the SLC SDU, the BeiDou network device 100 starts to calculate a receive window for receiving the ACK fed back by the terminal 100. The BeiDou network device 200 may send four SLC PDUs in the SLC SDU at an equal interval in ascending order of frame sequence numbers. The BeiDou network device 200 has sent the 1st SLC PDU (namely, an SLC PDU whose sequence number is 0 in FIG. 10C), the 2nd SLC PDU (namely, an SLC PDU whose sequence number is 1 in FIG. 10C), and the 3rd SLC PDU (namely, an SLC PDU whose sequence number is 2 in FIG. 10C). After receiving the 1st SLC PDU sent by the BeiDou network device 200, the terminal 100 starts an SLC layer receive session (session) at a moment t0, and calculates maximum waiting duration of a receive window (tUeRevWindow) for the terminal 100 to receive the outbound SLC SDU.

The terminal 100 has received the 1st SLC PDU that has been sent by the BeiDou network device 200. However, the 1st frame parsed out by the terminal 100 is not the 1st SLC PDU in the SLC SDU sent by the BeiDou network device 200. Because the BeiDou network device 200 has sent three SLC PDUs in the SLC SDU, the terminal estimates that a possibility of reclaiming the resource by the BeiDou network device 200 is low. The terminal 100 may not reply to the BeiDou network device with the NACK. The BeiDou network device 200 does not receive the NACK in the ACK receive window, and ends current SLC SDU transmission.

The following describes an outbound transmission control method in the BeiDou communication system provided in embodiments of this application.

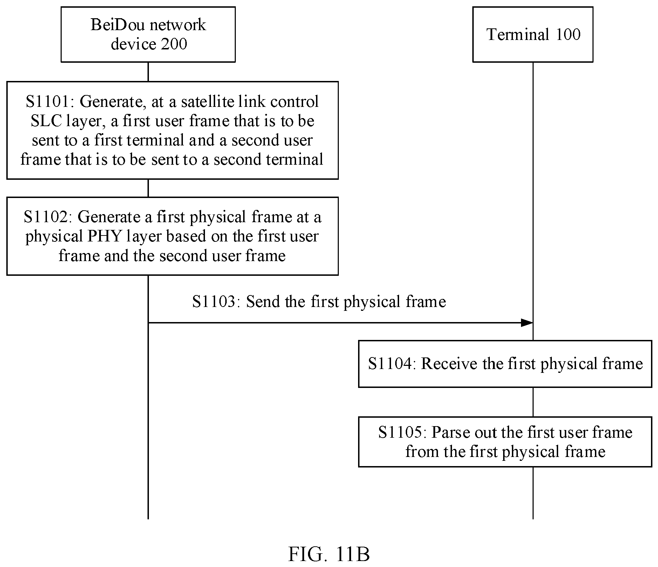

FIG. 11B is a schematic flowchart of the outbound transmission control method in the BeiDou communication system according to an embodiment of this application.

As shown in FIG. 11B, the outbound transmission control method in the BeiDou communication system includes the following steps.

S1101: The BeiDou network device 200 generates, at a satellite link control SLC layer, a first user frame that is to be sent to a first terminal and a second user frame that is to be sent to a second terminal.

Frame header information of the first user frame includes a first user ID field and a first frame type field, the first user ID field indicates a terminal that receives the first user frame, the first user ID field includes ID information of the first terminal, and the first frame type field indicates a frame type of the first user frame. Frame header information of the second user frame includes a second user ID field and a second frame type field, the second user ID field indicates a terminal that receives the second user frame, the second user ID field includes ID information of the second terminal, and the second frame type field indicates a frame type of the second user frame.

The first user frame includes a satellite link control protocol data unit SLC PDU, an acknowledgment character ACK frame, and an application layer receipt frame. The SLC PDU may be used to transmit data, and the acknowledgment character ACK frame may indicate whether the BeiDou network device successfully receives an SLC PDU of a terminal. The application layer receipt frame indicates whether the BeiDou network device successfully parses a received application layer packet.

S1102: The BeiDou network device 200 generates a first physical frame at a physical PHY layer based on the first user frame and the second user frame.

S1103: The BeiDou network device 200 sends the first physical frame to the terminal 100.

S1104: The terminal 100 receives the first physical frame.

S1105: The terminal 100 parses out the first user frame from the first physical frame.

The following describes some possible implementations performed by the BeiDou network device 200.

In a possible implementation, the first user frame is a first satellite link control protocol data unit SLC PDU in a first satellite link control service data unit SLC SDU, and the frame header information of the first user frame further includes an acknowledgment mode enable AM enable field, a total frame quantity field, and a frame sequence number field. The AM enable field indicates the first terminal to reply with an ACK or not to reply with an ACK; the total frame quantity field indicates a quantity of SLC PDUs sent by the BeiDou network device to the first terminal; and the frame sequence number field indicates a sequence number of the SLC PDU sent by the BeiDou network device 200.

The AM enable field of the first SLC PDU is a first value, and the first value indicates the first terminal not to reply with the ACK. The AM enable field of the first SLC PDU is a second value, and the second value indicates the first terminal to reply with the ACK.

In this way, a device receiving the first SLC PDU may learn, based on the frame header information, whether need to reply with the ACK, and does not need to learn, through separate signaling interaction, whether need to reply with the ACK.

In a possible implementation, the first user frame is the first SLC PDU, and after the BeiDou network device 200 sends the first physical frame, the method further includes: The BeiDou network device 200 continues to send one or more SLC PDUs in the first SLC SDU. After the BeiDou network device 200 sends all SLC PDUs in the first SLC SDU, the BeiDou network device 200 receives a first ACK sent by the first terminal. The first ACK indicates that the first terminal successfully receives all the SLC PDUs in the first SLC SDU.

In this way, the BeiDou network device 200 may learn, based on the ACK with which the first terminal replies, that the first terminal has successfully received the SLC SDU. In this way, the BeiDou network device 200 continues to send a next SLC SDU.

In a possible implementation, the first user frame is the first SLC PDU, and after the BeiDou network device 200 sends the first physical frame, the method further includes: After the BeiDou network device 200 completes sending the first SLC PDU, the BeiDou network device 200 receives a second ACK sent by the first terminal, where the second ACK indicates that the first terminal fails to receive the first SLC PDU; and the BeiDou network device 200 allocates resources of one or more SLC PDUs in the first SLC SDU to one or more SLC PDUs in a second SDU sent to the second terminal. In this way, resources of the BeiDou network device 200 can be saved, and resource reclaiming and utilization can be implemented.

In a possible implementation, the first user frame is the first SLC PDU, and after the BeiDou network device 200 sends the first physical frame, the method further includes: The BeiDou network device 200 continues to send one or more SLC PDUs in the first SLC SDU. After the BeiDou network device 200 sends all SLC PDUs in the first SLC SDU, the BeiDou network device 200 receives a third ACK sent by the first terminal. The third ACK indicates that the first terminal fails to receive all the SLC PDUs in the first SLC SDU.

In this way, the BeiDou network device 200 may determine, based on the ACK with which the first terminal replies, a next operation, for example, ending current sending.

In a possible implementation, the frame header information of the first physical frame includes a rate indicator field or a version number field, the rate indicator field indicates a transmission rate of the first physical frame, and the version number field indicates current version information of the first physical frame.

In this way, a device that receives the physical frame may learn the rate and version information of the physical frame.

In a possible implementation, the first user frame is the first SLC PDU, and before the BeiDou network device 200 generates, at the satellite link control SLC layer, the first user frame that is to be sent to the first terminal and the second user frame that is to be sent to the second terminal, the method further includes: The BeiDou network device 200 obtains, at the satellite link control SLC layer, a plurality of satellite link control service data units SLC SDUs delivered at a message data convergence protocol MDCP layer of the BeiDou network device 200, where the plurality of SLC SDUs include the first SLC SDU; and the BeiDou network device 200 segments the first SLC SDU into N SLC PDUs at the SLC layer.

In a possible implementation, before the BeiDou network device 200 obtains, at the SLC layer, the plurality of SLC SDUs delivered at the MDCP layer of the BeiDou network device 200, the method further includes: The BeiDou network device 200 obtains, at the MDCP layer, an application layer packet delivered at an application layer of the BeiDou network device 200; the BeiDou network device 200 uses the application layer packet as an MDCP SDU, and segments an obtained MDCP SDU into a plurality of MDCP PDUs after padding data and a redundancy length indicator field are added to the MDCP SDU, where the redundancy length indicator field indicates a data length of the padding data, the plurality of MDCP PDUs include a first MDCP PDU, packet header information of the first MDCP PDU includes a follow-up indicator field, and the follow-up indicator field indicates a rank of the first MDCP PDU in the plurality of MDCP PDUs; and the BeiDou network device 200 delivers the plurality of MDCP PDUs from the MDCP layer to the SLC layer as a plurality of SLC SDUs at the SLC layer.

In a possible implementation, before the BeiDou network device 200 obtains, at the MDCP layer, the application layer packet delivered at the application layer of the BeiDou network device 200, the method further includes: The BeiDou network device 200 obtains original data; the BeiDou network device 200 compresses the original data at the application layer to obtain compressed data; the BeiDou network device 200 encrypts the compressed data at the application layer to obtain encrypted data; and the BeiDou network device 200 adds packet header information to a header of the encrypted data to obtain the application layer packet. The packet header information includes a compression indicator field and an encryption indicator field. The compression indicator field indicates a compression algorithm used when the original data is compressed, and the encryption indicator field indicates an encryption algorithm used when the compressed data is encrypted.

In a possible implementation, that the BeiDou network device 200 segments the first SLC SDU into N SLC PDUs at the SLC layer specifically includes: The BeiDou network device 200 delivers the first SLC PDU and a second SLC PDU in the N SLC PDUs to a PHY layer; the BeiDou network device 200 generates the first physical frame at the PHY layer based on the first SLC PDU, and generates the second physical frame at the PHY layer based on the second SLC PUD; and the BeiDou network device 200 sends the first physical frame and the second physical frame.

In a possible implementation, that the BeiDou network device 200 sends the first physical frame includes: The BeiDou network device 200 adds first check bit information to a tail of the first physical frame at the PHY layer, and encodes the first physical frame and the first check bit information to obtain first code data; the BeiDou network device 200 modulates the first code data and a first reserved field of the first code data at the PHY layer to obtain first modulated data; the BeiDou network device 200 spreads the first modulated data at the PHY layer to obtain first spread modulated data; and the BeiDou network device 200 sends the first spread modulated data and first pilot information of the first spread modulated data at the PHY layer.

In a possible implementation, the method may further include: The BeiDou network device 200 determines a start moment of an ACK receive time window based on a moment at which the BeiDou network device 200 completes sending the last SLC PDU in the first SLC SDU, a processing delay from completing receiving the last SLC PDU in the first SLC SDU to sending the ACK by the first terminal, and an air interface propagation delay; and the BeiDou network device 200 starts to receive the ACK at the start moment of the ACK receive time window.

In this way, the BeiDou network device 200 may determine the start moment at which the ACK is received.

In a possible implementation, the method may further include: The BeiDou network device 200 determines an end moment of an ACK receive time window based on a moment at which the BeiDou network device 200 completes sending the last SLC PDU in the first SLC SDU, a processing delay from completing receiving the last SLC PDU in the first SLC SDU to sending the ACK by the first terminal, a time length in which the first terminal sends the ACK, and an air interface propagation delay; and the BeiDou network device 200 stops receiving the ACK at the end moment of the ACK receive time window.

In this way, the BeiDou network device 200 may determine the end moment at which the ACK is received.

Herein, for how the BeiDou network device specifically determines the start moment and the end moment for receiving the ACK, refer to the foregoing descriptions. Details are not described herein again.

The following describes some possible implementations performed by the terminal 100.

In a possible implementation, the first user frame is a first satellite link control protocol data unit SLC PDU in a first satellite link control service data unit SLC SDU, and the frame header information of the first user frame further includes an acknowledgment mode enable AM enable field, a total frame quantity field, and a frame sequence number field. The AM enable field indicates the terminal 100 to reply with an ACK or not to reply with an ACK; the total frame quantity field indicates a quantity of SLC PDUs sent by the BeiDou network device to the terminal 100; and the frame sequence number field indicates a sequence number of the SLC PDU sent by the BeiDou network device.

The AM enable field of the first SLC PDU is a first value, and the first value indicates the terminal 100 not to reply with the ACK. The AM enable field of the first SLC PDU is a second value, and the second value indicates the terminal 100 to reply with the ACK.

In this way, the terminal 100 receiving the first SLC PDU may learn, based on the frame header information, whether need to reply the ACK, and does not need to learn, through separate signaling interaction, whether need to reply the ACK.

In a possible implementation, the first user frame is the first SLC PDU, and after the terminal 100 parses out the first user frame from the first physical frame, and discards the second user frame, the method further includes: The terminal 100 receives one or more SLC PDUs in the first SLC SDU; and the terminal 100 sends a first ACK to the BeiDou network device after the terminal 100 receives all SLC PDUs in the first SLC SDU, where the first ACK indicates that the terminal 100 successfully receives all the SLC PDUs in the first SLC SDU.

A value of the first ACK may be 1.

In a possible implementation, the first user frame is the first SLC PDU in the first SLC SDU, and after the terminal 100 parses out the first user frame from the first physical frame, and discards the second user frame, the method further includes: When the first SLC PDU parsed out by the terminal 100 is not the 1st SLC PDU in the first SLC SDU, the terminal 100 sends a second ACK to the BeiDou network device, and stops receiving a second SLC PDU in the first SLC SDU, where the second ACK indicates that the terminal 100 fails to receive the first SLC PDU.

In a possible implementation, the first user frame is the first SLC PDU in the first SLC SDU, and after the terminal 100 parses out the first user frame from the first physical frame, and discards the second user frame, the method further includes: The terminal 100 receives one or more SLC PDUs in the first SLC SDU; and when the terminal 100 does not receive all SLC PDUs in the first SLC SDU in an SLC PDU receive time window, the terminal 100 sends a third ACK to the BeiDou network device, where the third ACK indicates that the terminal 100 fails to receive all the SLC PDUs in the first SLC SDU.

Values of the second ACK and the third ACK may be 0.

In a possible implementation, the first user frame is the first SLC PDU in the first SLC SDU, and that the terminal 100 parses out the first user frame from the first physical frame, and discards the second user frame includes: The terminal 100 obtains, at a PHY layer, first spread modulated data sent by a terminal; the terminal 100 despreads the first spread modulated data at the PHY layer to obtain first modulated data and a first modulation synchronization header; the terminal 100 demodulates the first modulated data and the first modulation synchronization header at the PHY layer to obtain first pilot data and a first synchronization header; the terminal 100 removes pilot information from the first pilot data at the PHY layer to obtain first code data; the BeiDou network device decodes the first code data at the PHY layer to obtain a first code block physical frame and first check information; and the terminal 100 checks a first code block at the PHY layer based on the first check information, and after check succeeds, delivers, as the first SLC PDU in the first SLC SDU at an SLC layer of the terminal 100, the first user frame that is in the first code block and whose ID field is the same as an ID of the terminal 100 from the PHY layer to the SLC layer of the terminal 100.

In a possible implementation, after the terminal 100 checks a first code block at the PHY layer based on the first check information, and after check succeeds, delivers, as the first SLC PDU in the first SLC SDU at the SLC layer of the terminal 100, the first user frame that is in the first code block and whose ID field is the same as an ID of the terminal 100 from the PHY layer to the SLC layer of the terminal 100, the method further includes: The terminal 100 splices M received SLC PDUs into the first SLC SDU at the SLC layer, and reports the first SLC SDU from the SLC layer of the terminal 100 to an MDCP layer of the terminal 100 as a first MDCP PDU at the MDCP layer. Packet header information of the first MDCP PDU includes a follow-up indicator field, and the follow-up indicator field indicates a rank of the first MDCP PDU in a plurality of MDCP PDUs sent by the BeiDou network device.

In a possible implementation, the method further includes: The terminal 100 obtains, at the MDCP layer, a second MDCP PDU reported from the SLC layer of the terminal 100; and when a follow-up indicator field in the second MDCP PDU indicates that the second MDCP PDU is the last one of the plurality of MDCP PDUs sent by the BeiDou network device, the terminal 100 splices the first MDCP PDU and the second MDCP PDU into an MDCP SDU at the MDCP layer, and reports the MDCP SDU from the MDCP layer to an application layer as an application layer packet.

In a possible implementation, the application layer packet includes packet header information and encrypted data, the packet header information includes an encryption indicator field and a compression indicator field, the compression indicator field indicates a compression algorithm used when the terminal compresses original data into compressed data, and the encryption indicator field indicates an encryption algorithm used when the terminal encrypts the compressed data into the encrypted data. The method further includes: The terminal 100 decrypts, at the application layer, the encrypted data in the application layer packet according to the encryption algorithm indicated by the encryption indicator field in the application layer packet, to obtain the compressed data; and the terminal 100 decompresses, at the application layer, the compressed data according to the compression algorithm indicated by the compression indicator field in the application layer packet, to obtain the original data.

In a possible implementation, the method further includes: The terminal 100 determines a time length of an SLC PDU receive window in the terminal 100 based on a frame sequence number of a received SLC PDU, a time length of the SLC PDU sent by the BeiDou network device, a total quantity of frames of an SLC PDU in one SLC SDU sent by the BeiDou network device, and a transmission interval between the SLC PDUs.

In a possible implementation, the method further includes: The terminal 100 determines, based on a time length of the SLC PDU receive window, a receiving moment of the first SLC PDU, a signal processing delay of the terminal 100, and a time length of the ACK sent by the terminal 100, a time point at which the terminal 100 sends the ACK.

For the terminal 100 to determine the time length of the SLC PDU receive window and the time point at which the ACK is sent, refer to the foregoing descriptions. Details are not described herein again.

After receiving N SLC PDUs in an SLC SDU sent by the BeiDou network device 200, the terminal 100 may determine, based on an AM enable field, a total frame quantity field, and a frame sequence number field in frame header information in the received SLC PDU, that the BeiDou network device 200 requests to reply with an ACK, and reply with the ACK in a parallel acknowledgment mode. Therefore, after the SLC PDU receive window ends, the terminal 100 generates an ACK based on a result of receiving the N SLC PDUs, and returns the ACK to the BeiDou network device 200. In a communication system of a BeiDou short packet service, the BeiDou network device 200 does not support data retransmission. Therefore, the ACK sent by the terminal 100 does not need to indicate a frame sequence number of an unreceived SLC PDU, and only needs to notify the BeiDou network device 200 whether all the N SLC PDUs are received or not all the N SLC PDUs are received. Therefore, a length of a bitmap part of the ACK may be 1 bit, and the 1 bit indicates whether the terminal 100 receives all the N SLC PDUs in the current SLC SDU.

Optionally, in a future evolved communication system of the BeiDou short packet service, the BeiDou network device 200 may alternatively support data retransmission, and the ACK sent by the terminal 100 may alternatively be used to notify the BeiDou network device 200 of a sequence number of an unreceived frame. Therefore, a length of a bitmap part of the ACK may be N bits, and the N bits indicate whether the terminal 100 does not receive all frame sequence numbers of the N SLC PDUs in the current SLC SDU.

The terminal 100 may start an SLC SDU session after receiving the 1st SLC SDU in the SLC SDUs. The terminal 100 may determine a remaining time length (tUeRevWindow) of the SLC PDU receive window on the terminal 100 based on a frame sequence number (nStationRevFrameSN) for receiving the latest SLC PDU, a moment (tUeRevRctSP) for receiving the latest SLC PDU, a total quantity (nStationTotalFrameNum) of frames in the SLC PDU in the SLC SDU, an interval (tStationTxInterval) at which the BeiDou network device 200 sends the SLC PDU, and a time length (tStationDl-FrameLen) of a physical frame sent by the BeiDou network device 200.

The terminal 100 may determine the remaining time length (tUeRevWindow) of the SLC PDU receive window according to the following formula:

$$tUeRevWindow =$$
$$(nStationTotalFrameNum - nStationRevFrameSN - 1)$$
$$* (tStationTxInterval + tStationDlFrameLen)$$

In the foregoing formula, a value of *tStatiomTxInterval* is preset on the terminal *100, nStationRevFrameSN*={0, 1, ..., *nStationTotalFrameNum*-1}, and a value of $\delta$ may be 125 ms.

After the SLC PDU receive window ends, the terminal 100 generates the ACK based on the result of receiving the N SLC PDUs, and returns the ACK to the BeiDou network device 200. The terminal 100 may determine, based on an air interface propagation delay (tPropagate), a signal processing scheduling delay (tUeProcess) of the terminal 100, duration (tRx2TxSwitch) for switching the terminal 100 from a receiving state to a transmitting state, and a receiving moment (tUeRevRctSP) at which the terminal 100 receives the latest SLC PDU, a time point (tUeSendAck) at which the terminal 100 sends the ACK.

The terminal 100 may determine, according to the following formula, the time point (tUeSendAck) at which the terminal 100 sends the ACK:

$$tUeSendAck = tUeRevRctSP +$$

$$tUeRevWindow + tUeProcess + tRx2TxSwitch + \Delta$$

In the formula, $\Delta$ is a sending time alignment deviation of the physical frame of the terminal 100.

The BeiDou network device 200 may determine a start moment (tStationStartRcvAck) of an ACK receive window (tStationRevAckWindow) and an end moment (tStationEndRcvAck) of the ACK receive window (tStationRevAckWindow) based on a moment (tStationTxEnd) at which the BeiDou network device 200 sends the last SLC PDU in the SLC SDU, the air interface propagation delay (tPropagate), the duration (tRx2TxSwitch) for switching the terminal 100 from the receiving state to the transmitting state, and the signal processing scheduling delay (tUeProcess) of the terminal 100.

The BeiDou network device 200 may determine the start moment (tStationStartRcvAck) of the ACK receive window (tStationRevAckWindow) according to the following formula:

tStationTxEnd < tStationStartRcvAck < tStationTxEnd + tRx2TxSwitch +2 * tPropagate + tUeProcess

In the preceding formula, tUeProcess may be a minimum value t_MinUeProc.

The BeiDou network device 200 may determine the end moment (tStationEndRcvAck) of the ACK receive window (tStationRevAckWindow) according to the following formula:

$$tStationEndRcvAck =$$

$$tStationTxEnd + tUeProcess + tRx2TxSwitch + 2 * tPropagate +$$

$$tUeUlFrameLen + \Delta$$

In the foregoing formula, tUeProcess may be a maximum value t_MaxUeProc.

The following first describes an example of the terminal 100 provided in embodiments of this application.

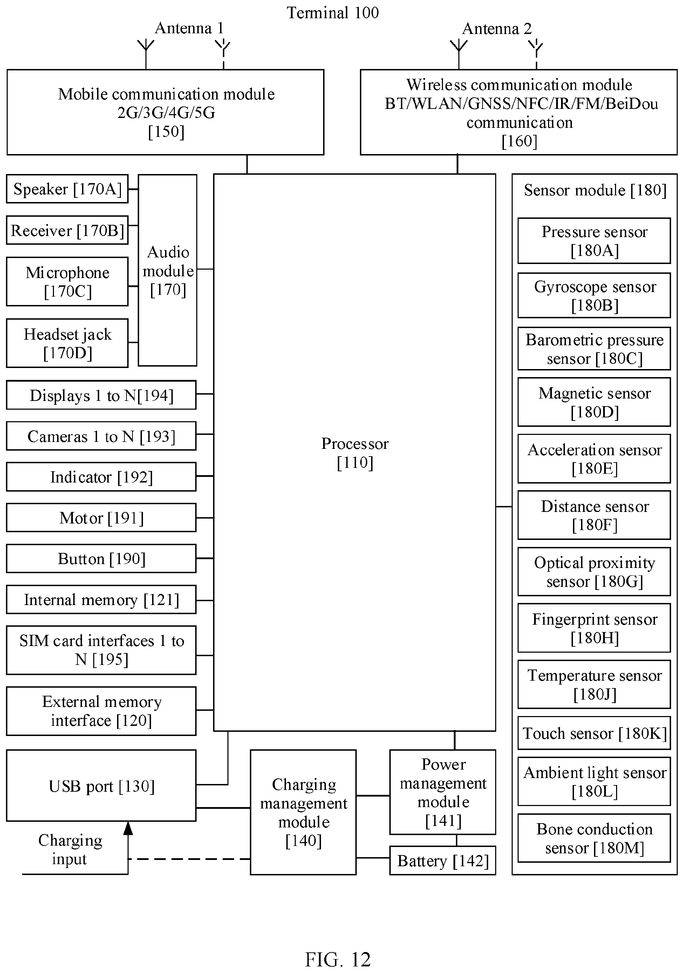

FIG. 12 is a schematic diagram of a structure of the terminal 100 according to an embodiment of this application.

The following uses the terminal 100 as an example to specifically describe this embodiment. It should be understood that the terminal 100 may have more or fewer components than those shown in the figure, or may combine two or more components, or may have different component configurations. The components shown in the figure may be implemented in hardware including one or more signal processing and/or application specific integrated circuits, software, or a combination of hardware and software.

The terminal 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that the structure illustrated in the embodiments of the present invention does not constitute a specific limitation on the terminal 100. In some other embodiments of this application, the terminal 100 may include more or fewer components than those shown in the figure, combine some components, split some components, or have different component arrangements. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the terminal 100. The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache. The memory may store an instruction or data that has been used or cyclically used by the processor 110. If the processor 110 needs to use the instructions or the data again, the processor may directly invoke the instructions or the data from the memory. This avoids repeated access and reduces waiting duration of the processor 110, so that system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/-transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the terminal 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and code an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface to implement a shooting function of the terminal 100. The processor 110 communicates with the display 194 through the DSI interface to implement a display function of the terminal 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The SIM interface may be configured to communicate with the SIM card interface 195, to implement a function of transmitting data to a SIM card or reading data in a SIM card.

The USB port 130 is a port that conforms to a USB standard specification, and may be specifically a mini USB port, a micro USB port, a USB Type-C port, or the like. The USB port 130 may be configured to connect a charger to charge the terminal 100, and may also be configured to exchange data between the terminal 100 and a peripheral device, or may be configured to connect to a headset, to play an audio by using the headset. The port may be further configured to connect to another electronic device, for example, an AR device.

It can be understood that the interface connection relationship between the modules illustrated in the embodiments of the present invention is merely a schematic illustration, and does not constitute a limitation on the structure of the terminal 100. In some other embodiments of this application, the terminal 100 may alternatively use an interface connection manner different from that in the foregoing embodiment, or a combination of multiple interface connection manners.

The charging management module 140 is configured to receive a charging input from a charger. The charger may be a wireless charger or a wired charger.

The power management module 141 is configured to connect the battery 142 and the charging management module 140 to the processor 110. The power management module 141 receives an input of the battery 142 and/or the charging management module 140, to supply power to the processor 110, the internal memory 121, an external memory, the display 194, the camera 193, the wireless communication module 160, and the like.

A wireless communication function of the terminal 100 may be implemented through the antenna 1, the antenna 2, the mobile communication module 150, the wireless communication module 160, a modem processor, a baseband processor, and the like.

The antenna 1 and the antenna 2 are configured to send and receive an electromagnetic wave signal. Each antenna in the terminal 100 may be configured to cover one or more communication frequency bands. Different antennas may be further multiplexed, to improve antenna utilization. For example, the antenna 1 may be multiplexed as a diversity antenna of a wireless local area network. In other embodiments, the antenna may be used in combination with a tuning switch.

The mobile communication module 150 may provide a wireless communication solution including 2G/3G/4G/5G applied to the terminal 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, or the like), or displays an image or a video by using the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, BeiDou communication, or the like and that is applied to the terminal 100. The wireless communication module 160 may be one or more components integrating at least one communication processor module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 of the terminal 100 is coupled to the mobile communication module 150, and the antenna 2 is coupled to the wireless communication module 160, so that the terminal 100 can communicate with the network and other devices through a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, BeiDou communication, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The terminal 100 may communicate with the BeiDou network device 200 by using the BeiDou communication technology. Optionally, the BeiDou communication technology may exist in an independent chip, or may be integrated into the wireless communication module 160.

The terminal 100 implements a display function through the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light emitting diode, AMOLED), a flexible light-emitting diode (flex light-emitting diode, FLED), a mini-LED, a micro-LED, a micro-OLED, a quantum dot light-emitting diode (quantum dot light emitting diodes, QLED), or the like. In some embodiments, the terminal 100 may include one or N displays 194, where N is a positive integer greater than 1.

The terminal 100 may implement a shooting function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and a color of the image. The ISP may further optimize parameters such as exposure and a color temperature of a photographing scenario. In some embodiments, the ISP may be disposed in the camera 193.

The camera 193 may be configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the terminal 100 may include one or N cameras 193, where N is a positive integer greater than 1.

The digital signal processor is configured to process a digital signal, and in addition to a digital image signal, may further process another digital signal. For example, when the terminal 100 selects a frequency, the digital signal processor is configured to perform Fourier transformation on frequency energy.

The video codec is configured to compress or decompress a digital video. The terminal 100 may support one or more video codecs. In this way, the terminal 100 can play or record videos in various encoding formats, for example, moving picture experts group (moving picture experts group, MPEG) 1, MPEG2, MPEG3, and MPEG4.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the terminal 100 may be implemented through the NPU, for example, image recognition, facial recognition, speech recognition, and text understanding

The internal memory 121 may include one or more random access memories (random access memory, RAM) and one or more non-volatile memories (non-volatile memory, NVM).

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory. (double data rate synchronous dynamic random access memory, DDR SDRAM, for example, a 5th generation DDR SDRAM is usually referred to as a DDR5 SDRAM), and the like.

The non-volatile memory may include a magnetic disk storage device and a flash memory (flash memory).

The flash memory may be classified into an NOR flash, an NAND flash, a 3D NAND flash, and the like according to an operation principle; may be classified into a single-level cell (single-level cell, SLC), a multi-level cell (multi-level cell, MLC), a triple-level cell (triple-level cell, TLC), a quad-level cell (quad-level cell, QLC), and the like based on a quantity of electric potential levels of a cell; or may be classified into a universal flash storage (English: universal flash storage, UFS), an embedded multimedia card (embedded multimedia card, eMMC), and the like according to storage specifications.

The random access memory may be directly read and written by using the processor 110. The random access memory may be configured to store an executable program (for example, machine instructions) in an operating system or another running program, and may be further configured to store data of a user, data of an application, and the like.

The nonvolatile memory may also store an executable program, data of a user, data of an application, and the like, which may be loaded into the random access memory in advance for directly reading and writing by the processor 110.

The terminal 100 may implement audio functions such as music playing and recording by using the audio module 170, the speaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal. The audio module 170 may be further configured to code and decode an audio signal. In some embodiments, the audio module 170 may be disposed in the processor 110, or some functional modules in the audio module 170 are disposed in the processor 110.

The speaker 170A, also referred to as a "horn", is configured to convert an electrical audio signal into a sound signal. The terminal 100 may allow for listening to music or answering hands-free calls with the speaker 170A.

The receiver 170B, also referred to as an "earpiece", is configured to convert an audio electrical signal into a sound signal. When a call is answered or a voice message is received through the terminal 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the terminal 100. In some other embodiments, two microphones 170C may be disposed in the terminal 100, to collect a sound signal and implement a noise reduction function. In some other embodiments, three, four, or more microphones 170C may alternatively be disposed in the terminal 100, to collect a sound signal, implement noise reduction, identify a sound source, implement a directional recording function, and the like.

The headset jack 170D is configured to connect to a wired headset. The headset jack 170D may be a USB port 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The terminal 100 determines pressure intensity based on a change in the capacitance. When a touch operation is performed on the display 194, the terminal 100 detects intensity of the touch operation by using the pressure sensor 180A. The terminal 100 may also calculate a touch position based on a detection signal of the pressure sensor 180A. In some embodiments, touch operations that are performed in a same touch position but have different touch operation intensity may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to the first pressure threshold is performed on the SMS message application icon, an instruction for creating a new SMS message is performed.

The gyroscope sensor 180B may be configured to determine a moving posture of the terminal 100. In some embodiments, an angular velocity of the terminal 100 around three axes (namely, axes x, y, and z) may be determined by using the gyroscope sensor 180B. The gyroscope sensor 180B may be configured to perform image stabilization during photographing. For example, when a shutter is pressed, the gyroscope sensor 180B detects an angle at which the terminal 100 jitters, calculates, based on the angle, a distance for which a lens module needs to compensate, and allows a lens to cancel the jitter of the terminal 100 through reverse motion, to implement the image stabilization. The gyroscope sensor 180B may also be used in a navigation scenario and a somatic game scenario.

The barometric pressure sensor 180C is configured to measure barometric pressure. In some embodiments, the terminal 100 calculates an altitude based on a barometric pressure value measured by the barometric pressure sensor 180C, to assist in positioning and navigation.

The magnetic sensor 180D includes a Hall effect sensor. The terminal 100 may detect opening and closing of a flip cover by using the magnetic sensor 180D. In some embodiments, when the terminal 100 is a clamshell phone, the terminal 100 may detect opening and closing of a flip cover by using the magnetic sensor 180D. Further, a feature, for example, automatic unlocking of the flip cover is set based on a detected opening or closing state of the flip cover.

The acceleration sensor 180E may detect values of accelerations of the terminal 100 in various directions (usually on three axes). A magnitude and a direction of gravity may be detected when the terminal 100 is still. The acceleration sensor 180E may be further configured to identify a posture of the electronic device, and used in an application such as switching between a landscape mode and a portrait mode or a pedometer.

The distance sensor 180F is configured to measure a distance. The terminal 100 may measure a distance in an infrared manner or a laser manner. In some embodiments, in a photographing scenario, the terminal 100 may measure a distance by using the distance sensor 180F to implement quick focusing.

The optical proximity sensor 180G may include, for example, a light emitting diode (LED) and an optical detector, for example, a photodiode. The light emitting diode may be an infrared light emitting diode. The terminal 100 transmits infrared light by using the light-emitting diode. The terminal 100 detects infrared reflected light from a nearby object by using the photodiode. When sufficient reflected light is detected, it may be determined that there is an object near the terminal 100. When insufficient reflected light is detected, the terminal 100 may determine that there is no object near the terminal 100. The terminal 100 may detect, by using the optical proximity sensor 180G, that the terminal 100 held by the user is close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The terminal 100 may adaptively adjust brightness of the display 194 based on the sensed ambient light brightness. The ambient light sensor 180L may also be configured to automatically adjust white balance during photographing. The ambient light sensor 180L may further cooperate with the optical proximity sensor 180G to detect whether the terminal 100 is in a pocket, to avoid an accidental touch.

The fingerprint sensor 180H is configured to collect a fingerprint. The terminal 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the terminal 100 executes a temperature processing policy by using the temperature detected by the temperature sensor 180J. For example, when the temperature reported by the temperature sensor 180J exceeds a threshold, the terminal 100 lowers performance of a processor located near the temperature sensor 180J, to reduce power consumption for thermal protection. In some other embodiments, when the temperature is lower than another threshold, the terminal 100 heats the battery 142 to avoid abnormal shutdown of the terminal 100 due to a low temperature. In some other embodiments, when the temperature is lower than still another threshold, the terminal 100 boosts an output voltage of the battery 142 to avoid abnormal shutdown caused by a low temperature.

The touch sensor 180K is also referred to as a "touch panel". The touch sensor 180K may be disposed on the display 194, and a touchscreen, also referred to as a "touchscreen", is formed by the touch sensor 180K and the display 194. The touch sensor 180K is configured to detect a touch operation performed on or near the touch sensor. The touch sensor may transfer the detected touch operation to the application processor to determine a type of the touch event. A visual output related to the touch operation may be provided on the display 194. In some other embodiments, the touch sensor 180K may alternatively be disposed on a surface of the terminal 100 at a location different from a location of the display 194.

The button 190 includes a power button, a volume button, and the like. The button 190 may be a mechanical button, or may be a touch button. The terminal 100 may receive a button input, and generate a button signal input related to user setting and function control of the terminal 100.

The motor 191 may generate a vibration prompt. The motor 191 may be configured to provide an incoming call vibration prompt and a touch vibration feedback. For example, touch operations performed on different applications (for example, photo taking and audio playing) may correspond to different vibration feedback effects. The motor 191 may also correspond to different vibration feedback effects for touch operations performed on different areas of the display 194. Different application scenarios (for example, a time prompt, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or detached from the SIM card interface 195, to implement contact with or separation from the terminal 100. The terminal 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195. The plurality of cards may be of a same type or different types. The SIM card interface 195 may be compatible with different types of SIM cards. The SIM card interface 195 is also compatible with an external storage card. The terminal 100 interacts with a network through the SIM card, to implement functions such as calling and data communication.

The foregoing content describes in detail the methods provided in this application. To better implement the foregoing solutions in embodiments of this application, embodiments of this application further provide corresponding apparatuses or devices.

In embodiments of this application, the terminal 100 and the BeiDou network device 200 may be divided into functional modules based on the foregoing method examples. For example, each functional module may be obtained through division based on each function, or two or more functions may be integrated in one processing module. The foregoing integrated module may be implemented in a form of hardware, or may be implemented in a form of a software function module. It should be noted that, in embodiments of this application, module division is an example, and is merely a logical function division. In actual implementation, another division manner may be used.

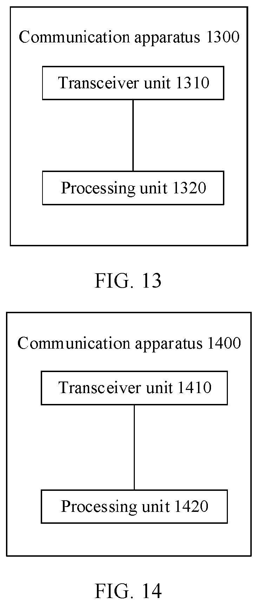

The following describes in detail communication apparatuses in embodiments of this application with reference to FIG. 13 to FIG. 16.

When an integrated unit is used, FIG. 13 is a schematic diagram of a structure of a communication apparatus 1300 according to an embodiment of this application. The communication apparatus 1300 may be the terminal 100 in the foregoing embodiments. Optionally, the communication apparatus 1300 may be a chip or a chip system, for example, a BeiDou communication chip. As shown in FIG. 13, the communication apparatus 1300 may include a transceiver unit 1310 and a processing unit 1320.

In a design, the transceiver unit 1310 may be configured to: receive a first physical frame sent by the BeiDou network device 200, where the first physical frame includes a first user frame that is to be sent to the terminal 100 and a second user frame that is to be sent to the second terminal, frame header information of the first user frame includes a first user ID field and a first frame type field, the first user ID field indicates a terminal that receives the first user frame, and the first user ID field includes ID information of the terminal 100; and parse out the first user frame from the first physical frame, and discard the second user frame.

The processing unit 1320 may be configured to: after the terminal 100 receives all SLC PDUs in a first SLC SDU, the terminal 100 sends a first ACK to the BeiDou network device. The first ACK indicates that the terminal 100 successfully receives all the SLC PDUs in the first SLC SDU.

The processing unit 1320 may be further configured to: when the first SLC PDU parsed out by the terminal 100 is not the 1st SLC PDU in the first SLC SDU, the terminal 100 sends a second ACK to the BeiDou network device, and stops receiving a second SLC PDU in the first SLC SDU. The second ACK indicates that the terminal 100 fails to receive the first SLC PDU.

The processing unit 1320 may be further configured to: when the terminal 100 does not receive all SLC PDUs in the first SLC SDU in an SLC PDU receive time window, the terminal 100 sends a third ACK to the BeiDou network device. The third ACK indicates that the terminal 100 fails to receive all the SLC PDUs in the first SLC SDU.

Optionally, the transceiver unit 1310 may be further configured to perform functional steps related to sending and receiving that are performed by the terminal 100 in the method embodiment shown in FIG. 11B.

Optionally, the processing unit 1320 may be further configured to perform functional steps related to protocol parsing, encapsulation, and operation determining that are performed by the terminal 100 in the method embodiment shown in the foregoing figure.

It should be understood that the communication apparatus 1300 in this design may correspondingly perform the method steps performed by the terminal 100 in the foregoing embodiment. For brevity, details are not described herein again.

When an integrated unit is used, FIG. 14 is a schematic diagram of a structure of a communication apparatus 1400 according to an embodiment of this application. The communication apparatus 1400 may be the BeiDou network device 200 in the foregoing embodiments. Optionally, the communication apparatus 1400 may be a specific network element in the BeiDou network device 200, for example, one or a combination of a plurality of network elements in the BeiDou ground transceiver station 22, the BeiDou central station 23, and the BeiDou short packet integrated communication platform 24. As shown in FIG. 14, the communication apparatus 1400 may include a transceiver unit 1410 and a processing unit 1420.

In a design, the transceiver unit 1410 may be configured to: generate, at a satellite link control SLC layer, a first user frame that is to be sent to the terminal 100 and a second user frame that is to be sent to the second terminal; generate a first physical frame at a physical PHY layer based on the first user frame and the second user frame; and send the first physical frame.

Frame header information of the first user frame includes a first user ID field and a first frame type field, the first user ID field indicates a terminal that receives the first user frame, the first user ID field includes ID information of the terminal 100, and the first frame type field indicates a frame type of the first user frame. Frame header information of the second user frame includes a second user ID field and a second frame type field, the second user ID field indicates a terminal that receives the second user frame, the second user ID field includes ID information of the second terminal, and the second frame type field indicates a frame type of the second user frame.

The processing unit 1420 may be configured to: after the BeiDou network device completes sending a first SLC PDU, the BeiDou network device receives a second ACK sent by the terminal 100, where the second ACK indicates that the terminal 100 fails to receive the first SLC PDU; and the BeiDou network device allocates resources of one or more SLC PDUs in the first SLC SDU to one or more SLC PDUs in a second SDU sent to the second terminal.

Optionally, the transceiver unit 1410 may be further configured to perform functional steps related to sending and receiving that are performed by the BeiDou network device 200 in the method embodiment shown in FIG. 11B.

Optionally, the processing unit 1420 may be further configured to perform functional steps that are related to protocol parsing, encapsulation, and operation determining and that are performed by the BeiDou network device 200 in the method embodiment shown in FIG. 11B.

It should be understood that the communication apparatus 1400 in this design may correspondingly perform the method steps performed by the BeiDou network device 200 in the foregoing embodiment. For brevity, details are not described herein again.

The foregoing describes the terminal 100 and the BeiDou network device 200 in embodiments of this application.

In a possible product form, the terminal 100 in embodiments of this application may be implemented by using a general bus architecture.

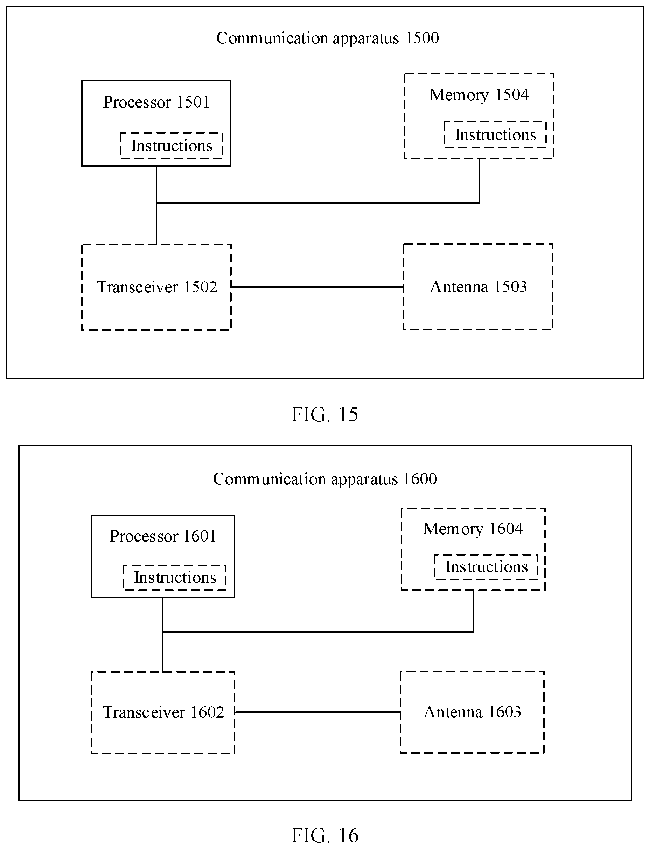

FIG. 15 is a schematic diagram of a structure of a communication apparatus 1500 according to an embodiment of this application. The communication apparatus 1500 may be the terminal 100 or an apparatus in the terminal 100. As shown in FIG. 15, the communication apparatus 1500 includes a processor 1501 and a transceiver 1502 that is internally connected to and communicates with the processor. The processor 1501 is a general-purpose processor, a dedicated processor, or the like, for example, may be a baseband processor in satellite communication or a central processing unit. The baseband processor in satellite communication may be configured to process a satellite communication protocol and satellite communication data. The central processing unit may be configured to: control a communication apparatus (for example, a baseband chip, a terminal, or a terminal chip), execute a computer program, and process data of the computer program. The transceiver 1502 may be referred to as a transceiver unit, a transceiver, a transceiver circuit, or the like, and is configured to implement a transceiver function. The transceiver 1502 may include a receiver and a transmitter. The receiver may be referred to as a receiving device, a receiver circuit, or the like, and is configured to implement the receiving function. The transmitter may be referred to as a transmitting device, a transmitter circuit, or the like, and is configured to implement the sending function. Optionally, the communication apparatus 1500 may further include an antenna 1503 and/or a radio frequency unit (not shown in the figure). The antenna 1503 and/or the radio frequency unit may be located inside the communication apparatus 1500, or may be separated from the communication apparatus 1400. In other words, the antenna 1403 and/or the radio frequency unit may be deployed remotely or in a distributed manner.

Optionally, the communication apparatus 1500 may include one or more memories 1504. The memory 1504 may store instructions. The instructions may be a computer program. The computer program may be run on the communication apparatus 1500, so that the communication apparatus 1500 performs the method described in the foregoing method embodiments. Optionally, the memory 1504 may further store data. The communication apparatus 1500 and the memory 1504 may be separately disposed, or may be integrated.

The processor 1501, the transceiver 1502, and the memory 1504 may be connected through a communication bus.

In a design, the communication apparatus 1500 may be configured to perform a function of the terminal 100 in the foregoing embodiment. The processor 1501 may be configured to perform functional steps related to protocol parsing, encapsulation, and operation determining that are performed by the terminal 100 in the embodiment shown in FIG. 11B, and/or another process of the technology described in this specification. The transceiver 1502 may be configured to perform functional steps related to protocol parsing, encapsulation, and operation determining that are performed by the terminal 100 in the embodiment shown in FIG. 11B, and/or another process of the technology described in this specification.

In any one of the foregoing designs, the processor 1501 may include a transceiver configured to implement sending and receiving functions. For example, the transceiver may be a transceiver circuit, an interface, or an interface circuit. A transceiver circuit, an interface, or an interface circuit configured to implement the sending function and a transceiver circuit, an interface, or an interface circuit configured to implement the receiving function may be separated, or may be integrated. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 1501 may store instructions, and the instruction may be a computer program. The computer program is run on the processor 1501, to enable the communication apparatus 1500 to perform the method steps performed by the terminal 100 in the foregoing method embodiments. The computer program may be fixed in the processor 1500. In this case, the processor 1501 may be implemented by hardware.

In an implementation, the communication apparatus 1500 may include a circuit, and the circuit may implement the sending, receiving, or communication function in the foregoing method embodiments. The processor and the transceiver that are described in this application may be implemented on an integrated circuit (integrated circuit, IC), an analog IC, a radio frequency integrated circuit RFIC, a mixed-signal IC, an application specific integrated circuit (application specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

A scope of the communication apparatus described in this application is not limited thereto, and the structure of the communication apparatus may not be limited in FIG. 15. The communication apparatus 1500 may be an independent device or may be a part of a large device. For example, the communication apparatus 1500 may be:

(1) an independent integrated circuit IC, a chip, or a chip system or subsystem;

(2) a set including one or more ICs, where optionally, the set of ICs may further include a storage component configured to store data and a computer program;

(3) an ASIC, for example, a modem (Modem);

(4) a module that can be embedded in another device;

(5) a receiver machine, a terminal, an intelligent terminal, a cellular phone, a wireless device, a handheld device, a mobile unit, a vehicle-mounted device, a network device, a cloud device, or an artificial intelligence device; or

(6) others.

In a possible product form, any network element (for example, the BeiDou ground transceiver station 22, the BeiDou central station 23, or the BeiDou short packet integrated communication platform 24) in the BeiDou network device 200 in embodiments of this application may be implemented by using a general bus architecture.

FIG. 16 is a schematic diagram of a structure of a communication apparatus 1600 according to an embodiment of this application. The communication apparatus 1600 may be the BeiDou network device 200 or an apparatus in the BeiDou network device 200. As shown in FIG. 16, the communication apparatus 1600 includes a processor 1601 and a transceiver 1602 that is internally connected to and communicates with the processor. The processor 1601 is a general-purpose processor, a dedicated processor, or the like, for example, may be a baseband processor in satellite communication or a central processing unit. The baseband processor in satellite communication may be configured to process a satellite communication protocol and satellite communication data. The central processing unit may be configured to: control a communication apparatus (for example, a baseband chip), execute a computer program, and process data of the computer program. The transceiver 1602 may be referred to as a transceiver unit, a transceiver, a transceiver circuit, or the like, and is configured to implement a transceiver function. The transceiver 1602 may include a receiver and a transmitter. The receiver may be referred to as a receiving device, a receiver circuit, or the like, and is configured to implement the receiving function. The transmitter may be referred to as a transmitting device, a transmitter circuit, or the like, and is configured to implement the sending function. Optionally, the communication apparatus 1600 may further include an antenna 1603 and/or a radio frequency unit (not shown in the figure). The antenna 1603 and/or the radio frequency unit may be located inside the communication apparatus 1600, or may be separated from the communication apparatus 1600. In other words, the antenna 1603 and/or the radio frequency unit may be deployed remotely or in a distributed manner.

Optionally, the communication apparatus 1600 may include one or more memories 1604. The memory 1604 may store instructions. The instructions may be a computer program. The computer program may be run on the communication apparatus 1600, so that the communication apparatus 1600 performs the method described in the foregoing method embodiments. Optionally, the memory 1604 may further store data. The communication apparatus 1600 and the memory 1604 may be separately disposed, or may be integrated.

The processor 1601, the transceiver 1602, and the memory 1604 may be connected through a communication bus.

In a design, the communication apparatus 1600 may be configured to perform a function of the BeiDou network device 200 in the foregoing embodiment. The processor 1601 may be configured to perform functional steps related to protocol parsing, encapsulation, and operation determining that are performed by the BeiDou network device 200 in the embodiment shown in FIG. 11B, and/or another process of the technology described in this specification. The transceiver 1602 may be configured to perform functional steps related to protocol parsing, encapsulation, and operation determining that are performed by the BeiDou network device 200 in the embodiment shown in FIG. 11B, and/or another process of the technology described in this specification.

In any one of the foregoing designs, the processor 1601 may include a transceiver configured to implement sending and receiving functions. For example, the transceiver may be a transceiver circuit, an interface, or an interface circuit. A transceiver circuit, an interface, or an interface circuit configured to implement the sending function and a transceiver circuit, an interface, or an interface circuit configured to implement the receiving function may be separated, or may be integrated. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 1601 may store instructions, and the instruction may be a computer program. The computer program is run on the processor 1601, to enable the communication apparatus 1600 to perform the method steps performed by the terminal 100 in the foregoing method embodiments. The computer program may be fixed in the processor 1600. In this case, the processor 1601 may be implemented by hardware.

An embodiment of this application further provides a computer-readable storage medium. The computer-readable storage medium stores computer program code. When the processor executes the computer program code, a communication apparatus performs the method in any one of the foregoing embodiments.

An embodiment of this application further provides a computer program product. When the computer program product runs on a computer, the computer is enabled to perform the method in any one of the foregoing embodiments.

An embodiment of this application further provides a communication apparatus. The apparatus may exist in a product form of a chip. A structure of the apparatus includes a processor and an interface circuit. The processor is configured to communicate with another apparatus through the interface circuit, to enable the apparatus to perform the method in any one of the foregoing embodiments.

An embodiment of this application further provides a BeiDou communication system, including a terminal 100 and a BeiDou network device 200. The terminal 100 and the BeiDou network device 200 may perform the method in any one of the foregoing embodiments.

A short packet communication function in the BeiDou communication system is described in this application. It may be understood that another satellite system may also have a short packet communication function. Therefore, in the BeiDou communication system, if another satellite system also supports a short packet communication function, the method described in this application is also applicable to communication of the another satellite system.

According to the context, the term "when" used in the foregoing embodiments may be interpreted as "if", "after", "in response to determining", or "in response to detecting". Similarly, according to the context, the phrase "when it is determined that" or "if (a stated condition or event) is detected" may be interpreted as a meaning of "if it is determined that", "in response to determining", "when (a stated condition or event) is detected", or "in response to detecting (a stated condition or event)".

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on the computer, the procedures or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. A computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

Persons of ordinary skill in the art may understand that all or some of the processes of the methods in embodiments may be implemented by a computer program instructing related hardware. The program may be stored in a computer-readable storage medium. When the program runs, the processes of the methods in embodiments are performed. The foregoing storage medium includes any medium that can store program code, such as a ROM, a random access memory RAM, a magnetic disk, or an optical disc.

**Claims**

1. A method in a satellite communication system, wherein the satellite communication system supports a short packet communication function, and the method comprising:

   receiving (S1104), by a first terminal, a first physical frame sent by a satellite network device, wherein the first physical frame comprises a first user frame that is to be sent to the first terminal and a second user frame that is to be sent to a second terminal, frame header information of the first user frame comprises a first user ID field and a first frame type field, the first user ID field comprises ID information of the first terminal; and
   parsing out (S1105), by the first terminal, the first user frame from the first physical frame, and discarding the second user frame;
   **characterized in that**
   the first user frame is a first satellite link control protocol data unit SLC PDU in a first satellite link control service data unit SLC SDU, and the frame header information of the first user frame further comprises an acknowledgment mode enable AM enable field, a total frame quantity field, and a frame sequence number field; the AM enable field indicates the first terminal to reply with an ACK or not to reply with an ACK; the total frame quantity field indicates a quantity of SLC PDUs sent by the satellite network device to the first terminal; and the frame sequence number field indicates a sequence number of the SLC PDU sent by the satellite network device.

2. The method according to claim 1, wherein the AM enable field of the first SLC PDU is a first value, and the first value indicates the first terminal not to reply with the ACK.

3.  The method according to claim 1, wherein the AM enable field of the first SLC PDU is a second value, and the second value indicates the first terminal to reply with the ACK.

4.  The method according to any one of claims 1 to 3, wherein after the parsing out (S1105), by the first terminal, the first user frame from the first physical frame, and discarding the second user frame, the method further comprises:

    receiving, by the first terminal, one or more SLC PDUs in the first SLC SDU; and
    sending, by the first terminal, a first ACK to the satellite network device after the first terminal receives all SLC PDUs in the first SLC SDU, wherein the first ACK indicates that the first terminal successfully receives all the SLC PDUs in the first SLC SDU.

5.  The method according to any one of claims 1 to 3, wherein the first user frame is the first SLC PDU in the first SLC SDU, and after the parsing out (S1105), by the first terminal, the first user frame from the first physical frame, and discarding the second user frame, the method further comprises:

    receiving, by the first terminal, one or more SLC PDUs in the first SLC SDU; and
    sending, by the first terminal, a third ACK to the satellite network device after the first terminal does not receive all SLC PDUs in the first SLC SDU in an SLC PDU receive time window, wherein the third ACK indicates that the first terminal fails to receive all the SLC PDUs in the first SLC SDU.

6.  The method according to any one of claims 1 to 5, wherein the first user frame is the first SLC PDU in the first SLC SDU, and the parsing out (S1105), by the first terminal, the first user frame from the first physical frame, and discarding the second user frame comprises:

    obtaining, by the first terminal at a PHY layer, first spread modulated data sent by the network device;
    despreading, by the first terminal, the first spread modulated data at the PHY layer to obtain first modulated data and a first modulation synchronization header;
    demodulating, by the first terminal, the first modulated data and the first modulation synchronization header at the PHY layer to obtain first pilot data and a first synchronization header;
    removing, by the first terminal, pilot information in the first pilot data at the PHY layer to obtain first code data;
    decoding, by the first terminal, the first code data at the PHY layer to obtain a first code block physical frame and first check information; and
    checking, by the first terminal, a first code block at the PHY layer based on the first check information, and after check succeeds, delivering, as the first SLC PDU in the first SLC SDU at an SLC layer of the first terminal, the first user frame that is in the first code block and whose ID field is the same as an ID of the first terminal from the PHY layer to the SLC layer of the first terminal.

7.  The method according to claim 6, wherein after the checking, by the first terminal, a first code block at the PHY layer based on the first check information, and after check succeeds, delivering, as the first SLC PDU in the first SLC SDU at an SLC layer of the first terminal, the first user frame that is in the first code block and whose ID field is the same as an ID of the first terminal from the PHY layer to the SLC layer of the first terminal, the method further comprises: splicing, by the first terminal, M received SLC PDUs into the first SLC SDU at the SLC layer, and reporting the first SLC SDU from the SLC layer of the first terminal to an MDCP layer of the first terminal as a first MDCP PDU at the MDCP layer, wherein packet header information of the first MDCP PDU comprises a follow-up indicator field, and the follow-up indicator field indicates a rank of the first MDCP PDU in a plurality of MDCP PDUs sent by the satellite network device.

8.  The method according to claim 7, wherein the method further comprises:

    obtaining, by the first terminal at the MDCP layer, a second MDCP PDU reported from the SLC layer of the first terminal; and
    when a follow-up indicator field in the second MDCP PDU indicates that the second MDCP PDU is the last one of the plurality of MDCP PDUs sent by the satellite network device, splicing, by the first terminal, the first MDCP PDU and the second MDCP PDU into an MDCP SDU at the MDCP layer, and reporting the MDCP SDU from the MDCP layer to an application layer as an application layer packet.

9.  The method according to claim 8, wherein the application layer packet comprises packet header information and encrypted data, the packet header information comprises an encryption indicator field and a compression indicator field, the compression indicator field indicates a compression algorithm used when the network devicecompresses original data into compressed data, and the encryption indicator field indicates an encryption algorithm used when the network deviceencrypts the compressed data into the encrypted data; and
the method further comprises:

decrypting, by the first terminal at the application layer, the encrypted data in the application layer packet according to the encryption algorithm indicated by the encryption indicator field in the application layer packet, to obtain the compressed data; and
decompressing, by the first terminal at the application layer, the compressed data according to the compression algorithm indicated by the compression indicator field in the application layer packet, to obtain the original data.

10. The method according to any one of claims 1 to 9, wherein the method further comprises:
determining, by the first terminal, a remaining time length of an SLC PDU receive window on the first terminal based on a frame sequence number of a currently received SLC PDU, a moment of receiving the current SLC PDU, a time length of a physical frame sent by the satellite network device, a total quantity of frames of an SLC PDU in one SLC SDU sent by the satellite network device, and a transmission interval between the SLC PDUs.

11. The method according to claim 10, wherein the method further comprises:
determining, by the first terminal based on a time length of the SLC PDU receive window, a receiving moment of the first SLC PDU, a signal processing delay of the first terminal, and a time length of the ACK sent by the first terminal, a time point at which the first terminal sends the ACK.

12. A communication apparatus (1500), comprising one or more processors (1501), one or more memories (1504), and a transceiver (1502), wherein the transceiver (1502) and the one or more memories (1504) are coupled to the one or more processors (1501), the one or more memories (1504) are configured to store computer program code, the computer program code comprises computer instructions, and when the one or more processors (1501) execute the computer instructions, the communication apparatus (1500) is enabled to perform the method according to any one of claims 1 to 11.

**Patentansprüche**

1. Verfahren in einem Satellitenkommunikationssystem, wobei das Satellitenkommunikationssystem eine Kurzpaket-Kommunikationsfunktion unterstützt, und das Verfahren umfasst:

Empfangen (S1104), durch ein erstes Endgerät, eines ersten physischen Rahmens, der durch eine Satellitennetzwerkvorrichtung gesendet wird, worin der erste physische Rahmen einen ersten Benutzerrahmen, der an das erste Endgerät zu senden ist, und einen zweiten Benutzerrahmen, der an ein zweites Endgerät zu senden ist, umfasst, Rahmen-Header-Informationen des ersten Benutzerrahmens ein erstes Benutzer-ID-Feld und ein erstes Rahmentyp-Feld umfassen, das erste Benutzer-ID-Feld ID-Informationen des ersten Endgeräts umfasst; und
Herausparsen (S1105), durch das erste Endgerät, des ersten Benutzerrahmens aus dem ersten physischen Rahmen und Verwerfen des zweiten Benutzerrahmens;
**dadurch gekennzeichnet, dass**
der erste Benutzerrahmen eine erste Satellitenlinksteuerungs-Protokolldateneinheit SLC-PDU in einer ersten Satellitenlinksteuerungs-Servicedateneinheit SLC-SDU ist, und die Rahmenheaderinformationen des ersten Benutzerrahmens ferner ein Bestätigungsmodus-Aktivierungsfeld AM-Aktivierungsfeld, ein Gesamtrahmenzahlfeld und ein Rahmensequenznummernfeld umfassen; das AM-Aktivierungsfeld dem ersten Endgerät angibt, mit einer ACK zu antworten oder nicht mit einer ACK zu antworten; das Feld für die Gesamtrahmenzahl eine Anzahl von SLC-PDUs angibt, die von der Satellitennetzwerkvorrichtung an das erste Endgerät gesendet werden; und das Rahmensequenznummernfeld eine Sequenznummer der von der Satellitennetzwerkvorrichtung gesendeten SLC-PDU angibt.

2. Verfahren nach Anspruch 1, wobei das AM-Aktivierungsfeld der ersten SLC-PDU ein erster Wert ist, und der erste Wert dem ersten Endgerät angibt, nicht mit der ACK zu antworten.

3. Verfahren nach Anspruch 1, wobei das AM-Aktivierungsfeld der ersten SLC-PDU ein zweiter Wert ist, und der zweite Wert dem ersten Endgerät angibt, mit der ACK zu antworten.

4. Verfahren nach einem der Ansprüche 1 bis 3, wobei nach dem Herausparsen (S1105) des ersten Benutzerrahmens aus dem ersten physischen Rahmen durch das erste Endgerät und dem Verwerfen des zweiten Benutzerrahmens das Verfahren ferner umfasst:

   Empfangen, durch das erste Endgerät, einer oder mehrerer SLC-PDUs in der ersten SLC-SDU; und
   Senden einer ersten ACK durch das erste Endgerät an die Satellitennetzwerkvorrichtung, nachdem das erste Endgerät alle SLC-PDUs in der ersten SLC-SDU empfangen hat, wobei die erste ACK angibt, dass das erste Endgerät alle SLC-PDUs in der ersten SLC-SDU erfolgreich empfangen hat.

5. Verfahren nach einem der Ansprüche 1 bis 3, wobei der erste Benutzerrahmen die erste SLC-PDU in der ersten SLC-SDU ist, und nach dem Herausparsen (S1105) des ersten Benutzerrahmens aus dem ersten physischen Rahmen durch das erste Endgerät und dem Verwerfen des zweiten Benutzerrahmens das Verfahren ferner umfasst:

   Empfangen, durch das erste Endgerät, einer oder mehrerer SLC-PDUs in der ersten SLC-SDU; und
   Senden, durch das erste Endgerät, einer dritten ACK an die Satellitennetzwerkvorrichtung, nachdem das erste Endgerät nicht alle SLC-PDUs in der ersten SLC-SDU in einem SLC-PDU-Empfangszeitfenster empfangen hat, wobei die dritte ACK angibt, dass das erste Endgerät alle SLC-PDUs in der ersten SLC-SDU nicht zu empfangen vermag.

6. Verfahren nach einem der Ansprüche 1 bis 5, wobei der erste Benutzerrahmen die erste SLC-PDU in der ersten SLC-SDU ist, und das Herausparsen (S1105), durch das erste Endgerät, des ersten Benutzerrahmens aus dem ersten physischen Rahmen und das Verwerfen des zweiten Benutzerrahmens umfasst:

   Erhalten, durch das erste Endgerät auf einer PHY-Schicht, von ersten gespreizten modulierten Daten, die von der Netzwerkvorrichtung gesendet werden;
   Entspreizen, durch das erste Endgerät, der ersten gespreizten modulierten Daten auf der PHY-Schicht, um erste modulierte Daten und einen ersten Modulationssynchronisationsheader zu erhalten;
   Demodulieren, durch das erste Endgerät, der ersten modulierten Daten und des ersten Modulationssynchronisationsheaders auf der PHY-Schicht, um erste Pilotdaten und einen ersten Synchronisationsheader zu erhalten;
   Entfernen, durch das erste Endgerät, von Pilotinformationen in den ersten Pilotdaten auf der PHY-Schicht, um erste Codedaten zu erhalten;
   Decodieren, durch das erste Endgerät, der ersten Codedaten auf der PHY-Schicht, um einen ersten physischen Codeblockrrahmen und erste Prüfinformationen zu erhalten; und Prüfen, durch das erste Endgerät, eines ersten Codeblocks auf der PHY-Schicht basierend auf den ersten Prüfinformationen, und nach erfolgreichem Prüfen, Übermitteln, als die erste SLC-PDU in der ersten SLC-SDU auf einer SLC-Schicht des ersten Endgeräts, des ersten Benutzerrahmens, der sich in dem ersten Codeblock befindet und dessen ID-Feld dasselbe wie eine ID des ersten Endgeräts ist, von der PHY-Schicht zu der SLC-Schicht des ersten Endgeräts.

7. Verfahren nach Anspruch 6, wobei nach dem Prüfen, durch das erste Endgerät, eines ersten Codeblocks auf der PHY-Schicht basierend auf den ersten Prüfinformationen, und nach erfolgreichem Prüfen, Übermitteln, als die erste SLC-PDU in der ersten SLC-SDU auf einer SLC-Schicht des ersten Endgeräts, des ersten Benutzerrahmens, der sich in dem ersten Codeblock befindet und dessen ID-Feld dasselbe wie eine ID des ersten Endgeräts ist, von der PHY-Schicht zu der SLC-Schicht des ersten Endgeräts, das Verfahren ferner umfasst:
   Splicing, durch das erste Endgerät, von M empfangenen SLC-PDUs in die erste SLC-SDU auf der SLC-Schicht, und Melden der ersten SLC-SDU von der SLC-Schicht des ersten Endgeräts an eine MDCP-Schicht des ersten Endgeräts als eine erste MDCP-PDU auf der MDCP-Schicht, wobei Paketheaderinformationen der ersten MDCP-PDU ein Folge-Indikatorfeld umfassen, und das Folge-Indikatorfeld einen Rang der ersten MDCP-PDU in einer Vielzahl von MDCP-PDUs angibt, die von der Satellitennetzwerkvorrichtung gesendet werden.

8. Verfahren nach Anspruch 7, wobei das Verfahren ferner umfasst:

   Erhalten, durch das erste Endgerät auf der MDCP-Schicht, einer zweiten MDCP-PDU, die von der SLC-Schicht des ersten Endgeräts gemeldet wird; und
   wenn ein Folge-Indikatorfeld in der zweiten MDCP-PDU angibt, dass die zweite MDCP-PDU die letzte der Vielzahl von MDCP-PDUs ist, die von der Satellitennetzwerkvorrichtung gesendet wurden, Splicing, durch das erste Endgerät, der ersten MDCP-PDU und der zweiten MDCP-PDU zu einer MDCP-SDU auf der MDCP-Schicht, und Melden der MDCP-SDU von der MDCP-Schicht an eine Anwendungsschicht als Anwendungsschichtpaket.

9. Verfahren nach Anspruch 8, wobei das Anwendungsschichtpaket Paketheaderinformationen und verschlüsselte Daten umfasst, die Paketheaderinformationen ein Verschlüsselungsindikatorfeld und ein Komprimierungsindikatorfeld umfassen, das Komprimierungsindikatorfeld einen Komprimierungsalgorithmus angibt, der verwendet wird, wenn die Netzwerkvorrichtung ursprüngliche Daten in komprimierte Daten komprimiert, und das Verschlüsselungsindikatorfeld einen Verschlüsselungsalgorithmus angibt, der verwendet wird, wenn die Netzwerkvorrichtung die komprimierten Daten in die verschlüsselten Daten verschlüsselt; und wobei das Verfahren ferner umfasst:

Entschlüsseln der verschlüsselten Daten in dem Anwendungsschichtpaket durch das erste Endgerät auf der Anwendungsschicht gemäß dem durch das Verschlüsselungsindikatorfeld in dem Anwendungsschichtpaket angegebenen Verschlüsselungsalgorithmus, um die komprimierten Daten zu erhalten; und
Dekomprimieren der komprimierten Daten durch das erste Endgerät auf der Anwendungsschicht gemäß dem Komprimierungsalgorithmus, der durch das Komprimierungsindikatorfeld in dem Anwendungsschichtpaket angegeben wird, um die ursprünglichen Daten zu erhalten.

10. Verfahren nach einem der Ansprüche 1 bis 9, wobei das Verfahren ferner umfasst: Bestimmen, durch das erste Endgerät, einer verbleibenden Zeitdauer eines SLC-PDU-Empfangsfensters auf dem ersten Endgerät basierend auf einer Rahmensequenznummer einer aktuell empfangenen SLC-PDU, einem Moment des Empfangens der aktuellen SLC-PDU, einer Zeitdauer eines von der Satellitennetzwerkvorrichtung gesendeten physischen Rahmens, einer Gesamtzahl von Rahmen einer SLC-PDU in einer durch die Satellitennetzwerkvorrichtung gesendeten SLC-SDU und einem Übertragungsintervall zwischen den SLC-PDUs.

11. Verfahren nach Anspruch 10, wobei das Verfahren ferner umfasst: Bestimmen, durch das erste Endgerät basierend auf einer Zeitdauer des SLC-PDU-Empfangsfensters, eines Empfangsmoments der ersten SLC-PDU, einer Signalverarbeitungsverzögerung des ersten Endgeräts und einer Zeitdauer der durch das erste Endgerät gesendeten ACK, eines Zeitpunkts, zu dem das erste Endgerät die ACK sendet.

12. Kommunikationseinrichtung (1500), die einen oder mehrere Prozessoren (1501), einen oder mehrere Speicher (1504) und einen Transceiver (1502) umfasst, wobei der Transceiver (1502) und der eine oder die mehreren Speicher (1504) mit dem einen oder den mehreren Prozessoren (1501) gekoppelt sind, der eine oder die mehreren Speicher (1504) konfiguriert sind, um Computerprogrammcode zu speichern, der Computerprogrammcode Computeranweisungen umfasst, und wenn der eine oder die mehreren Prozessoren (1501) die Computeranweisungen ausführen, die Kommunikationseinrichtung (1500) aktiviert wird, um das Verfahren nach einem der Ansprüche 1 bis 11 durchzuführen.

**Revendications**

1. Procédé dans un système de communication par satellite, dans lequel le système de communication par satellite prend en charge une fonction de communication par paquets courts, et le procédé comprenant :

la réception (S1104), par un premier terminal, d'une première trame physique envoyée par un dispositif de réseau satellite, dans lequel la première trame physique comprend une première trame utilisateur qui doit être envoyée au premier terminal et une seconde trame utilisateur qui doit être envoyée à un second terminal, les informations d'en-tête de trame de la première trame utilisateur comprennent un premier champ d'ID utilisateur et un premier champ de type de trame, le premier champ d'ID utilisateur comprend des informations d'ID du premier terminal ; et
l'analyse (S1105), par le premier terminal, de la première trame utilisateur à partir de la première trame physique, et le rejet de la seconde trame utilisateur ;
**caractérisé en ce que** la première trame utilisateur est une première unité de données de protocole de commande de liaison par satellite, SLC, PDU dans une première unité de données de service de commande de liaison par satellite, SDU SLC, et les informations d'en-tête de trame de la première trame utilisateur comprennent en outre un champ d'activation d'activation de mode d'accusé de réception AM, un champ de quantité totale de trames, et un champ de numéro de séquence de trame ; le champ d'activation AM indique au premier terminal de répondre par un ACK ou de ne pas répondre par un ACK ; le champ de quantité totale de trames indique une quantité de PDU SLC envoyées par le dispositif de réseau satellite au premier terminal ; et le champ de numéro de séquence de trame indique un numéro de séquence de la PDU SLC envoyée par le dispositif de réseau satellite.

**2.** Procédé selon la revendication 1, dans lequel le champ d'activation AM de la première PDU SLC est une première valeur, et la première valeur indique au premier terminal de ne pas répondre par l'ACK.

**3.** Procédé selon la revendication 1, dans lequel le champ d'activation AM de la première PDU SLC est une seconde valeur, et la seconde valeur indique au premier terminal de répondre par l'ACK.

**4.** Procédé selon l'une quelconque des revendications 1 à 3, dans lequel, après l'analyse (S1105), par le premier terminal, de la première trame utilisateur à partir de la première trame physique, et le rejet de la seconde trame utilisateur, le procédé comprend en outre :

la réception, par le premier terminal, d'une ou plusieurs PDU SLC dans la première SDU SLC ; et
l'envoi, par le premier terminal, d'un premier ACK au dispositif de réseau satellite après la réception, par le premier terminal, de toutes les PDU SLC dans la première SDU SLC, dans lequel le premier ACK indique que le premier terminal reçoit avec succès toutes les PDU SLC dans la première SDU SLC.

**5.** Procédé selon l'une quelconque des revendications 1 à 3, dans lequel la première trame utilisateur est la première PDU SLC dans la première SDU SLC, et après l'analyse (S1105), par le premier terminal, de la première trame utilisateur à partir de la première trame physique, et le rejet de la seconde trame utilisateur, le procédé comprend en outre :

la réception, par le premier terminal, d'une ou plusieurs PDU SLC dans la première SDU SLC ; et
l'envoi, par le premier terminal, d'un troisième ACK au dispositif de réseau satellite après la non réception, par le premier terminal, de toutes les PDU SLC dans la première SDU SLC dans une fenêtre temporelle de réception de PDU SLC, dans lequel le troisième ACK indique que le premier terminal ne parvient pas à recevoir toutes les PDU SLC dans la première SDU SLC.

**6.** Procédé selon l'une quelconque des revendications 1 à 5, dans lequel la première trame utilisateur est la première PDU SLC dans la première SDU SLC, et l'analyse (S1105), par le premier terminal, de la première trame utilisateur à partir de la première trame physique, et le rejet de la seconde trame utilisateur comprend :

l'obtention, par le premier terminal au niveau d'une couche PHY, de premières données modulées par étalement envoyées par le dispositif de réseau ;
le désétalement, par le premier terminal, des premières données modulées étalées au niveau de la couche PHY pour obtenir de premières données modulées et un premier en-tête de synchronisation de modulation ;
la démodulation, par le premier terminal, des premières données modulées et du premier en-tête de synchronisation de modulation au niveau de la couche PHY pour obtenir de premières données pilotes et un premier en-tête de synchronisation ;
la suppression, par le premier terminal, d'informations pilotes dans les premières données pilotes au niveau de la couche PHY pour obtenir de premières données de code ;
le décodage, par le premier terminal, des premières données de code au niveau de la couche PHY pour obtenir une première trame physique de bloc de code et de premières informations de vérification ; et
la vérification, par le premier terminal, d'un premier bloc de code au niveau de la couche PHY sur la base des premières informations de vérification, et une fois la vérification réussie, la distribution, en tant que première PDU SLC dans la première SDU SLC au niveau d'une couche SLC du premier terminal, de la première trame utilisateur qui se trouve dans le premier bloc de code et dont le champ d'ID est le même qu'un ID du premier terminal, de la couche PHY à la couche SLC du premier terminal.

**7.** Procédé selon la revendication 6, dans lequel après la vérification, par le premier terminal, d'un premier bloc de code au niveau de la couche PHY sur la base des premières informations de vérification, et après la vérification réussie, la distribution, en tant que première PDU SLC dans la première SDU SLC au niveau d'une couche SLC du premier terminal, de la première trame utilisateur qui se trouve dans le premier bloc de code et dont le champ d'ID est le même qu'un ID du premier terminal de la couche PHY à la couche SLC du premier terminal, le procédé comprend en outre : l'épissage, par le premier terminal, de M PDU SLC reçues dans la première SDU SLC au niveau de la couche SLC, et le rapport de la première SDU SLC de la couche SLC du premier terminal à une couche MDCP du premier terminal en tant que première PDU MDCP au niveau de la couche MDCP, dans lequel des informations d'en-tête de paquet de la première PDU MDCP comprennent un champ indicateur de suivi, et le champ indicateur de suivi indique un rang de la première PDU MDCP dans une pluralité de PDU MDCP envoyées par le dispositif de réseau satellite.

**8.** Procédé selon la revendication 7, dans lequel le procédé comprend en outre :

l'obtention, par le premier terminal au niveau de la couche MDCP, d'une seconde PDU MDCP rapportée à partir de la couche SLC du premier terminal ; et
lorsqu'un champ d'indicateur de suivi dans la seconde PDU MDCP indique que la seconde PDU MDCP est la dernière de la pluralité de PDU MDCP envoyées par le dispositif de réseau satellite, l'épissage, par le premier terminal, de la première PDU MDCP et de la seconde PDU MDCP dans une SDU MDCP au niveau de la couche MDCP, et le rapport de la SDU MDCP de la couche MDCP à une couche d'application en tant que paquet de couche d'application.

**9.** Procédé selon la revendication 8, dans lequel le paquet de couche d'application comprend des informations d'en-tête de paquet et des données chiffrées, les informations d'en-tête de paquet comprennent un champ indicateur de chiffrement et un champ indicateur de compression, le champ indicateur de compression indique un algorithme de compression utilisé lorsque le dispositif de réseau compresse des données originales en données compressées, et le champ indicateur de chiffrement indique un algorithme de chiffrement utilisé lorsque le dispositif de réseau chiffre les données compressées en données chiffrées ; et
le procédé comprend en outre :

le déchiffrement, par le premier terminal au niveau de la couche d'application, des données chiffrées dans le paquet de couche d'application selon l'algorithme de chiffrement indiqué par le champ indicateur de chiffrement dans le paquet de couche d'application, afin d'obtenir les données compressées ; et
la décompression, par le premier terminal au niveau de la couche application, des données compressées selon l'algorithme de compression indiqué par le champ indicateur de compression dans le paquet de couche d'application, afin d'obtenir les données originales.

**10.** Procédé selon l'une quelconque des revendications 1 à 9, dans lequel le procédé comprend en outre :
la détermination, par le premier terminal, d'une longueur de temps restante d'une fenêtre de réception de PDU SLC sur le premier terminal sur la base d'un numéro de séquence de trame d'une PDU SLC actuellement reçue, d'un moment de réception de la PDU SLC actuelle, d'une longueur de temps d'une trame physique envoyée par le dispositif de réseau satellite, d'une quantité totale de trames d'une PDU SLC dans une SDU SLC envoyée par le dispositif de réseau satellite, et un intervalle de transmission entre les PDU SLC.

**11.** Procédé selon la revendication 10, dans lequel le procédé comprend en outre : la détermination, par le premier terminal sur la base d'une longueur de temps de la fenêtre de réception de PDU SLC, d'un moment de réception de la première PDU SLC, d'un retard de traitement de signal du premier terminal, et d'une longueur de temps de l'ACK envoyé par le premier terminal, d'un point temporel auquel le premier terminal envoie l'ACK.

**12.** Appareil de communication (1500), comprenant un ou plusieurs processeurs (1501), une ou plusieurs mémoires (1504) et un émetteur-récepteur (1502), dans lequel l'émetteur-récepteur (1502) et la ou les mémoires (1504) sont couplés au ou aux processeurs (1501), la ou les mémoires (1504) sont configurées pour stocker un code de programme informatique, le code de programme informatique comprend des instructions informatiques, et lorsque le ou les processeur (1501) exécutent les instructions informatiques, l'appareil de communication (1500) est activé pour réaliser le procédé selon l'une quelconque des revendications 1 à 11.

FIG. 1

FIG. 2

BeiDou network device 200

Application (APP) layer

Original data

Compression

Compression indicator | Compressed data

Encryption

Packet header

... | Encryption indicator | Compression indicator | Encrypted data

Message data convergence protocol (MDCP) layer

MDCP SDU

Packet segmentation

MDCP PDU 0 — Follow-up indicator | M_segment

MDCP PDU 1 — Follow-up indicator | M_segment

MDCP PDU 2 — Follow-up indicator | M_segment

TO FIG. 3B

TO FIG. 3B

FIG. 3A

Satellite link control (SLC) layer

SLC PDU — Frame header — S_segment

SLC PDU — Frame header — S_segment

SLC PDU — Frame header — S_segment

SLC PDU — Frame header — S_segment

SLC SDU 0

SLC SDU 1

SLC SDU 2

Frame segmentation

FIG. 3B

Physical layer protocol (PHY)

FIG. 3C

EP 4 358 430 B1

Message data convergence protocol (MDCP) layer

Application (APP) layer

TO
FIG. 4B

MDCP
PDU 0

Follow-up
indicator

M_segment

MDCP
PDU 1

Follow-up
indicator

M_segment

MDCP
SDU

...
Packet
header

Encryption
algorithm

Compression
indicator

Encrypted
data

Decryption

Compression
indicator

Compressed
data

Decompression

Original
data

MDCP
PDU 2

Follow-up
indicator

M_segment

Packet
splicing

TO
FIG. 4B

Terminal 100

FIG. 4A

Satellite link control (SLC) layer

TO
FIG. 4C

SLC
PDU

Frame
header

S_segment

SLC
SDU 0

CONT.
FROM
FIG. 4A

SLC
PDU

Frame
header

S_segment

SLC
SDU 1

TO
FIG. 4C

SLC
PDU

Frame
header

S_segment

SLC
SDU 2

SLC
PDU

Frame
header

S_segment

Frame
splicing

CONT.
FROM
FIG. 4A

FIG. 4B

Physical layer protocol (PHY)

| S2C_p tributary | S2C_d tributary | S2C_d tributary | S2C_d tributary | | S2C_d tributary |

Transmission →

Secondary code (125 ms) | Physical slot (125 ms) | Spread modulated data (spread modulated data) | Modulated data (modulated data)

11 ms | Reserved segment | Code data (code data) → Decoding → Physical frame (114 ms)

Version number
User frame (general data frame–terminal 500)
...
User frame (general data frame–terminal 100)
Check bit

User frame (general data frame) → CONT. FROM FIG. 4B
User frame (general data frame)

Secondary code (125 ms) | Physical slot (125 ms) | Spread modulated data (spread modulated data) | Modulated data (modulated data)

11 ms | Reserved segment | Code data (code data) → Decoding → Physical frame (114 ms)

Version number
User frame (general data frame–terminal 100)
...
User frame (ACK frame–terminal 400)
Check bit

User frame (general data frame) → CONT. FROM FIG. 4B
User frame (general data frame)

Despreading → Demodulation →

Frame extracting →

FIG. 4C

43

FIG. 5

FIG. 6

General data frame–user frame–2K rate

| Single user frame header | User information |
|---|---|

| Frame type 2 bits | AM enable 1 bit | Frame length 8 bits | User ID 44 bits | Total frame quantity 2 bits | Frame sequence number 2 bits |
|---|---|---|---|---|---|

FIG. 7A

General data frame–user frame–4K rate

| Single user frame header | User information |
|---|---|

| Frame type 2 bits | AM enable 1 bit | Frame length 9 bits | User ID 44 bits | Total frame quantity 2 bits | Frame sequence number 2 bits |
|---|---|---|---|---|---|

FIG. 7B

ACK frame–user frame

Single user frame header | User information

Frame type 2 bits | User ID 44 bits

Acknowledgment character bitmap ACK bitmap 4 bits

FIG. 7C

Application layer receipt frame–user frame

Single user frame header | User information

Frame type 2 bits | User ID 44 bits

Error code Error code 4 bits

FIG. 7D

FIG. 8A

EP 4 358 430 B1

FIG. 8B

tStationTxEnd

Moment at which the
BeiDou network device
sends a last frame of SLC
PDU in an SLC SDU

tStationTxInterval
SLC PDU transmission interval

SLC PDU_0    SLC PDU_1    SLC PDU_2    SLC PDU_3

| 0 | 1 | 2 | 3 |

BeiDou
network
device 200

The BeiDou network device 200 does not need
to receive an ACK, and current SLC packet
transmission succeeds

Length of an
outbound frame

tStationFrameLen

Terminal
100

The terminal 100 successfully receives
an SLC packet currently, and does not
return ACK information

tPrpagate

Air interface
propagation
delay          t0

Maximum waiting duration for the terminal to
receive an outbound SLC SDU
tUeRevWindow

Signal
processing
delay
tUeProcess

FIG. 9A

tStationTxEnd
Moment at which the
BeiDou network device
sends a last frame of SLC
PDU in an SLC SDU

tStationTxInterval
SLC PDU transmission interval

SLC PDU_0   SLC PDU_1   SLC PDU_2   SLC PDU_3

| 0 | 1 | 2 | 3 |

The BeiDou network device 200
does not need to receive a NACK,
and ends current transmission

BeiDou
network
device 200

Length of an
outbound frame
tStationFrameLen

Terminal
100

The terminal 100 fails to receive
an SLC packet currently, and does
not return NACK information

tPrpagate

Air interface
propagation
delay    t0

Maximum waiting duration for the terminal
to receive an outbound SLC SDU

tUeRevWindow

Signal
processing delay
tUeProcess

FIG. 9B

FIG. 10A

EP 4 358 430 B1

FIG. 10B

SLC PDU
transmission interval

SLC PDU_0    SLC PDU_1    SLC PDU_2    SLC PDU_3

BeiDou
network
device 200

Length
of an outbound frame
tStationFrameLen

The BeiDou network device 200 receives
the NACK, reclaims an outbound resource,
and reallocates the outbound resource

Outbound resource reclaiming

ACK_Bit: 0

When determining that a 1st frame received is
not a 1st SLC PDU in an SLC SDU sent by
the BeiDou network device 200, the terminal
100 immediately replies with a NACK

ACK

Terminal
100

tUeProcess
Signal processing delay

t0    tUeRevWindow
Maximum waiting duration for
the terminal to receive an
outbound SLC SDU

FIG. 10C

EP 4 358 430 B1

tStationRevAckWindow

Maximum waiting duraion for the BeiDou network device to receive the ACK sent by the terminal

tStationTxInterval
SLC PDU transmission interval

SLC PDU_0    SLC PDU_1  SLC PDU_2   SLC PDU_3

BeiDou
network
device
200

| 0 | 1 | 2 | 3 |

Possible scope of outbound resource reclaiming

The BeiDou network device 200 does not receive the ACK in an ACK receive window, and ends current SLC packet transmission

Terminal
100

ACK

ACK_Bit

tUeUlFrameLen

When a $1^{st}$ frame parsed out by the terminal 100 is not a $1^{st}$ SLC PDU in an SLC SDU sent by the BeiDou network device 200, and it is estimated that a possibility of reclaiming a resource on the BeiDou network device 200 side is low, the terminal 100 does not reply with a NACK

FIG. 11A

| BeiDou network device 200 | | Terminal 100 |

S1101: Generate, at a satellite link control SLC layer, a first user frame that is to be sent to a first terminal and a second user frame that is to be sent to a second terminal

S1102: Generate a first physical frame at a physical PHY layer based on the first user frame and the second user frame

S1103: Send the first physical frame

S1104: Receive the first physical frame

S1105: Parse out the first user frame from the first physical frame

FIG. 11B

Terminal 100

Antenna 1　　　　　　　　　　　　　　　　Antenna 2

| Mobile communication module 2G/3G/4G/5G [150] | | Wireless communication module BT/WLAN/GNSS/NFC/IR/FM/BeiDou communication [160] |

| Speaker [170A] | | |
| Receiver [170B] | Audio module [170] | |
| Microphone [170C] | | |
| Headset jack [170D] | | |

| Displays 1 to N[194] |
| Cameras 1 to N [193] |
| Indicator [192] |
| Motor [191] |
| Button [190] |
| Internal memory [121] |
| SIM card interfaces 1 to N [195] |
| External memory interface [120] |

Processor [110]

| Sensor module [180] |
| Pressure sensor [180A] |
| Gyroscope sensor [180B] |
| Barometric pressure sensor [180C] |
| Magnetic sensor [180D] |
| Acceleration sensor [180E] |
| Distance sensor [180F] |
| Optical proximity sensor [180G] |
| Fingerprint sensor [180H] |
| Temperature sensor [180J] |
| Touch sensor [180K] |
| Ambient light sensor [180L] |
| Bone conduction sensor [180M] |

| USB port [130] |

Charging input

| Charging management module [140] |

| Power management module [141] |
| Battery [142] |

FIG. 12

Communication apparatus 1300

Transceiver unit 1310

Processing unit 1320

FIG. 13

Communication apparatus 1400

Transceiver unit 1410

Processing unit 1420

FIG. 14

Communication apparatus 1500

Processor 1501

Instructions

Memory 1504

Instructions

Transceiver 1502

Antenna 1503

FIG. 15

Communication apparatus 1600

Processor 1601

Instructions

Memory 1604

Instructions

Transceiver 1602

Antenna 1603

FIG. 16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6522635 B1